# EUROPÄISCHE PATENTSCHRIFT

(11) **EP 3 234 929 B1**
(45) Veröffentlichungstag und Bekanntmachung des Hinweises auf die Patenterteilung: **22.05.2024**
(21) Anmeldenummer: 15817073.8
(22) Anmeldetag: 16.12.2015
(51) Int. Cl.: G07D 7/1205

(54) **VORRICHTUNG UND VERFAHREN ZUR PRÜFUNG VON MERKMALSSTOFFEN**
DEVICE AND METHOD FOR VERIFYING FEATURE SUBSTANCES
DISPOSITIF ET PROCÉDÉ POUR CONTRÔLER DES SUBSTANCES CARACTÉRISTIQUES

(30) Priorität: 16.12.2014 DE 102014018726
(43) Veröffentlichungstag der Anmeldung: 25.10.2017
(73) Patentinhaber: Giesecke+Devrient Currency Technology GmbH, 81677 München (DE)
(72) Erfinder: CLARA, Martin, 80801 München (DE); GIERING, Thomas, 85614 Kirchseeon (DE); KECHT, Johann, 81677 München (DE); RAUSCHER, Wolfgang, 94365 Parkstetten (DE); STARK, Martin, 81825 München (DE); HAPP, Thomas, 81825 München (DE)
(74) Vertreter: Giesecke+Devrient IP
(86) Internationale Anmeldenummer: PCT/EP2015/002537
(87) Internationale Veröffentlichungsnummer: WO 2016/096133

(56) Entgegenhaltungen:
- WO-A1-2012/030988
- DE-A1-102004 035 494
- US-A1- 2009 141 961
- US-A1- 2009 174 879
- US-B1- 6 514 767
- US-B2- 7 443 489
- SHIXUAN HE ET AL: "Baseline correction for Raman spectra using an improved asymmetric least squares method", ANALYTICAL METHODS, Bd. 6, Nr. 12, 10. März 2014 (2014-03-10), Seite 4402, XP055259085, GBR ISSN: 1759-9660, DOI: 10.1039/c4ay00068d
- ZHI-MIN ZHANG ET AL: "An intelligent background-correction algorithm for highly fluorescent samples in Raman spectroscopy", JOURNAL OF RAMAN SPECTROSCOPY, Bd. 41, Nr. 6, 9. Oktober 2009 (2009-10-09), Seiten 659-669, XP055093969, ISSN: 0377-0486, DOI: 10.1002/jrs.2500

## Beschreibung

Die Erfindung betrifft eine Vorrichtung und ein Verfahren zur Prüfung von mit Merkmalsstoffen markierten Wertdokumenten, sowie die entsprechenden Merkmalsstoffe.

Um Gegenstände oder insbesondere Wertdokumente wie Banknoten, Schecks, Reisepässe, Karten, etc. gegen Fälschungen abzusichern, werden seit längerem Merkmalsstoffe als Sicherheitsmerkmale auf- oder eingebracht, deren Präsenz durch Messung ihrer charakteristischen Eigenschaften nachgewiesen und zur Authentisierung des Wertdokuments verwendet werden kann. Eine besondere Klasse darunter sind maschinenlesbare Sicherheitsmerkmale die beispielsweise auf magnetischen, photolumineszierenden, elektrolumineszierenden, optischer Absorption oder weiteren spektroskopischen Eigenschaften der Merkmalstoffe beruhen. Diese können meist nicht mit dem bloßen Auge erkannt werden, sondern werden zur Authentisierung mit einem dafür spezialisierten Sensor detektiert und überprüft. Insbesondere im Bereich der maschinellen Echtheits- sowie Zustandsprüfung von Banknoten werden diese in Banknoten-Bearbeitungsmaschinen mit hohen Geschwindigkeiten, z. B. mehr als 11m/s, an einer Reihe von Sensoren vorbeigeführt und automatisch geprüft, bewertet und sortiert.

Dabei ist es wünschenswert, nicht nur einem Messpunkt pro Wertdokument zu erhalten sondern das gesamte Wertdokument ortsaufgelöst abzutasten. Dadurch wird zum einen die Sicherheit der Echtheitsprüfung erhöht, da dann bei entsprechender räumlicher Ausdehnung der Sicherheitsmarkierung auf dem Wertdokument auch Kompositfälschungen erkannt werden können. Derartige Fälschungen sind aus verschiedenen Segmenten bzw. Abschnitten von echten Wertdokumenten sowie anderen gefälschten Segmenten gestückelt zusammengesetzt.

Weiterhin kann bei ortsaufgelöster Detektion bei einer räumlich lokal angebrachten Sicherheitsmarkierung nicht nur deren generelle Präsenz nachgewiesen, sondern auch deren korrekte Positionierung auf dem Dokument überprüft werden.

Zusätzlich kann bei ortsaufgelöster Detektion durch die Erkennung von räumlich z.B. in Form eines Barcodes angebrachter Sicherheitsmarkierung zusätzliche Informationen über z.B. Art, Serie, Wert etc. des Wertdokuments ausgelesen werden.

In der Literatur finden sich einige Beschreibungen zur Markierung von Wertdokumenten mit Raman-aktiven Substanzen oder insbesondere surface enhanced Raman scattering (SERS) -aktiven Substanzen sowie deren Detektion zur Echtheitssicherung.

Beispielsweise beschreibt die WO 91/111492 A1 die Absicherung von Wertdokumenten mit einer Druckfarbe mit feinkörnigen Raman-aktiven Inhaltstoffen. Diese werden bei Bestrahlung mit Laserlicht von wenigen mW anhand ihres charakteristischen Raman-Signals bei zu detektierenden Leistungen im pW-Bereich nachgewiesen.

In der EP 0806460 B1 wird die Markierung und Absicherung von Wertdokumenten mit einer Sicherheitstinte beschrieben, die SERS bzw. surface enhanced resonant Raman scattering (SERRS) aktiven Substanzen enthält. Hierbei werden die relativ schwachen Raman-Signale der Markersubstanzen durch an der Oberfläche von metallischen Nanopartikeln auftretende oberflächenplasmonische Effekte z.T. drastisch um z.B. 6 Größenordnungen verstärkt (SERS). Im Fall der resonanten Ramanstreuung wird die Anregungswellenlänge spektral in die Nähe eines elektronischen Übergangs des nachzuweisenden Markerstoffs gelegt, was durch die resultierende Resonanz eine weitere signifikante Verstärkung des Ramansignals zur Folge hat. Zum Nachweis werden hier klassische Instrumente zur stationären Raman-Spektroskopie in einem Mikroskopaufbau eingesetzt. Diese bieten zwar prinzipiell eine hervorragende Ortsauflösung, haben aber den gravierenden Nachteil, dass typische Messdauern im Bereich von Sekunden bis hin zu mehreren Minuten sehr lange sind und daher für schnell bewegte Substrate ungeeignet sind.

Auch die EP 1385637 B1 beschreibt maschinenlesbare Sicherheitsmarkierungen für Wertdokumente mit einer Vielzahl an geeigneten Markerstoffen bzw. Raman-aktiven Molekülen. Für den Echtheitsnachweis wird, neben herkömmlichen kommerziellen Raman-Spektrometern, ein spezieller portabler Raman-Sensor mit Anregung im Infrarotbereich und einem CCD-Detektor mit 2048 Pixeln linearer Auflösung verwendet. Es werden Aufnahmedauern mit Integrationszeiten von 5 s bis 60 s erreicht.

In der WO 2014/ 022330 A2 werden SERS-Nanomarker zur Echtheitssicherung sowie deren Nachweis mit einem konfokalem Raman-Mikroskop oder einem portablen Raman-Spektrometer beschrieben. In beiden Fällen ist die Messdauer mit 5 s bzw. 20 s viel zu langsam um auch für schnell bewegte Proben geeignet zu sein.

In der WO 2007/146753 A2 wird ein prinzipiell universell verwendbares Hochgeschwindigkeits-Raman-Spektrometer beschrieben, das mit einem opto-mechanischen rotierenden Zeitmultiplexer die einzelnen jeweils durch einen maßgeschneiderten Bandpass-Spektralfilter definierten Wellenlängenkanäle zeitlich versetzt auf einen einzigen, sehr schnell auslesbaren Detektor lenkt. Durch diesen Ansatz können Spektren innerhalb von 1-100 ms gewonnen werden. Dies bietet für schnell bewegte Proben jedoch keine hinreichende Ortsauflösung, zumal dabei die dabei gewonnenen Spektren auch noch räumlich/spektral verschmiert werden. Durch die zeitlich gestaffelte Detektion der unterschiedlichen Spektralkanäle stammt die Intensitätsinformation der verschiedenen Spektralkanäle nicht vom gleichen Ort, sondern von einem je nach Detektionszeitpunkt des spezifischen Kanals weiter entfernten Ort auf der weiterbewegten Probe.

In der WO 2012/030988 A1 wird ein Inline-Spektralsensor für SERS- bzw. Raman-markierte bewegte Objekte beschrieben. Dieser enthält einen fasergekoppelten Messkopf mit Anbindung an die Lichtquelle sowie an das Spektrometer, das mit einem CCD-basierten Detektor ausgerüstet ist. Die spektrale Auflösung soll dabei zwischen 0,01 nm und 5000 nm betragen. Es wird eine Messzeit für die Aufnahme eines Spektrums an einem SERSmarkierten Dokument von 5ms bei einer Geschwindigkeit von 10m/s erreicht, was - falls sofort wiederholbar - bestenfalls einer Ortsauflösung von 5 cm entspricht. Dies ist nicht hinreichend für eine Echtheitsbestimmung mit Positionsüberprüfung des Markierungstoffs auf dem Wertdokument oder gar für eine Erkennung von Barcodes.

Zur maschinellen Prüfung der Echtheit von bewegten lumineszierenden Wertdokumenten wie beispielsweise Banknoten sind weiterhin Sensoren z.B. aus der WO 2006/010537 A1 bekannt, die die Lumineszenzeigenschaften daran angebrachter Markierungsstoffe spektroskopisch überprüfen. Diese sind jedoch nicht zur Messung von Raman-oder SERS-Signalen geeignet. Die Ramansignale treten in einem Spektralbereich auf, der mit einer typischen Verschiebung von u.U. nur wenigen 1-100 cm⁻¹ sehr nahe an der Anregungs-Laserwellenlänge liegt und lassen sich - im Gegensatz zu Lumineszenzsignalen - nicht zeitaufgelöst über ein Nachleuchten trennen. Außerdem ist die Intensität der Raman-Linien sehr klein im Vergleich zur Rayleigh-Linie des elastisch gestreuten Anregungslichts. Daher sind die existierenden Lumineszenzsensoren nicht für einen Nachweis von Raman-Markern geeignet, da hier die eher schwachen Ramansignale während der Anregung vollständig durch das Rayleigh-gestreute Anregungslicht überstrahlt werden.

Weiterhin sind bildgebende und damit ortsauflösende Sensoren zur maschinellen Prüfung von bewegten Banknoten beispielsweise aus der WO 96/36021 A1 bekannt. Diese erreichen durch die Aufnahme des von der Banknote reflektierten Lichts über eine Filterung und Aufnahme mit Zeilen-CCD-Kameras eine Ortsauflösung kleiner 0,5 mm bei Geschwindigkeiten größer als 5m/s. Derartige Kameras sind jedoch nicht zur sichereren Identifikation von Raman-Spektroskopiesignalen geeignet, da erstens die Beleuchtung ungeeignet ist um sinnvolle Ramansignale zu erzeugen, zweitens die erforderliche spektrale Auflösung bezüglich Trennschärfe sowie Kanalanzahl nicht annähernd erreichbar ist und drittens die notwendige Filterung der intensiven Anregungslichts mit einer Unterdrückung um viele Größenordnungen in einer derartigen Bildsensor-Geometrie nicht darstellbar ist.

Zusammenfassend ist bisher zwar die Absicherung von Wertdokumenten mit Raman- bzw. SERS-Markierungsstoffen sowie deren prinzipieller Nachweis durch stationäre oder auch an bewegten Wertdokumenten durchgeführte Raman-Spektroskopie bekannt. Es existieren jedoch keine Sensoren, die den spezifischen Nachweis eines Raman oder SERS-Markers über das Dokument hinweg zumindest entlang einer Spur ortsaufgelöst auch bei den in Banknotenbearbeitungsmaschinen üblichen Transportgeschwindigkeiten von bis zu bis zu 11 m/s oder mehr führen könnten.

Davon ausgehend ist die zu lösende Aufgabe der vorliegenden Erfindung eine Vorrichtung und ein Verfahren zur Prüfung von Wertdokumenten bereitzustellen, die Sicherheitsmerkmale auf Raman- oder SERSspektroskopischer Basis auch bei hohen Transportgeschwindigkeiten, z. B. mehr als 11 m/s, mit einer Ortsauflösung im niedrigen Millimeter-Bereich oder besser detektieren und zuverlässig identifizieren können.

Diese Aufgabe wird durch die unabhängigen Ansprüche gelöst. Die abhängigen Ansprüche und die nachfolgende Beschreibung erläutern bevorzugte Ausgestaltungen.

Es wird ein Ramansensor mit einer drastisch erhöhten Auslesegeschwindigkeit bei gleichzeitig gutem Signal/Rausch-Verhältnis beschrieben, der die erfindungsgemäße Aufgabe wie folgt löst. Sensor zur maschinellen Prüfung von bewegten Wertdokumenten mit mindestens einem Raman oder SERS oder SERRS-Sicherheitsmerkmal, wobei der Sensor dazu ausgebildet ist das Wertdokument zur Prüfung mit Anregungslicht aus einer Laserquelle zu beleuchten und das resultierende Ramanlicht der Sicherheitsmerkmale in einem Spektrometer zu dispergieren und mit einem Detektor mit mehreren Spektralkanälen spektral aufgelöst zu erfassen, wobei das in den Spektralkanälen gesammelte Licht vom gleichen Flächenbereich des Wertdokuments synchron vom Detektor erfasst wird, wobei die Spektralkanäle gleichzeitig parallel ausgelesen werden und durch wiederholte Messung den Spektralkanälen entsprechende ortsaufgelöste Messsignale gebildet werden.

Der erfindungsgemäße Sensor ist dafür ausgelegt, eine Ortsauflösung von weniger als 12 mm, bevorzugt weniger als 4 mm, besonders bevorzugt weniger als 2 mm zu erreichen. Da für die Wertdokumente hohe Transportgeschwindigkeiten, z. B. 12 m/s oder mehr, auftreten können, steht bei einer räumlichen Auflösung von 2 mm im ungünstigsten Fall nur eine Zeit von ca. 160 µs für die Messung des gesamten Spektrums zur Verfügung. Die Auslegung des Sensors ist entsprechend daran angepasst, einerseits möglichst viel Licht auf den Detektor zu bringen um auch bei sehr kurzen Integrationszeiten ein möglichst gutes Signal/Rausch-Verhältnis zu erreichen. Anderseits müssen die Detektorelemente, die das spektral aufgelöste Licht detektieren, hinreichend schnell und insbesondere synchron auslesbar sein um eine räumlich/spektrale Verschmierung der Spektren durch die Weiterbewegung der Banknote während der Auslesezeit zu vermeiden.

Bei der erfindungsgemäßen Lösung ist gegenüber den bisher bekannten und im Labor oder als Handgeräte üblichen Raman-Spektroskopiegeräten mit 1000-4000 Kanälen die Anzahl der Spektralkanäle reduziert. Diese werden dafür aber bevorzugt vollständig parallel ausgelesen, wodurch die für eine gute Ortsauflösung in Transportrichtung essentielle hohe Auslesegeschwindigkeit erst ermöglicht wird. Durch eine Auswertung der gewonnenen Signale mit erfindungsgemäßen Analyseverfahren ist überraschenderweise trotz der reduzierten Auflösung eine zuverlässige Identifikation der Raman-oder SERS-aktiven Merkmalstoffe bzw. die daran geknüpfte Echtheitserkennung möglich.

Der erfindungsgemäße Sensor weist weiterhin eine spezielle optische Auslegung des Spektrometers auf, mit der eine zuverlässige Unterdrückung des Rayleigh-Streulichts möglich ist. In einer Ausführungsform wird zusätzlich zum Detektor für das Raman-Licht ein weiterer Detektor im Sensor angebracht, der die spektrale Lage und Intensität des Anregungs-Laserlichts misst.

Die erfindungsgemäßen Sensor-Vorrichtungen können in allen Arten von Vorrichtungen verwendet werden, in denen optische Strahlung, insbesondere Raman-Strahlung geprüft wird. Obwohl nicht darauf beschränkt, wird im Folgenden anhand von Figuren als bevorzugte Variante die Prüfung von Banknoten in Banknotenbearbeitungsvorrichtungen beschrieben, die beispielsweise zum Zählen und/ oder Sortieren und/ oder Einzahlen und/ oder Auszahlen von Banknoten dienen können.

Zudem umfasst die Erfindung ein Verfahren zur maschinellen Prüfung von Wertdokumenten mit mindestens einem Raman oder SERS oder SERRS-Sicherheitsmerkmal mittels eines Sensors, wobei das Wertdokument während der Prüfung mit hoher Geschwindigkeit relativ zum Sensor bewegt wird, das Wertdokument zur Prüfung mit Anregungslicht aus einer Laserquelle beleuchtet wird, das resultierende Ramanlicht der Sicherheitsmerkmale in einem Spektrometer dispergiert wird und mit einem Detektor mit mehreren Spektralkanälen spektral aufgelöst erfasst wird, wobei aus den Spektralkanälen entsprechende Messsignale gebildet werden, wobei das in den Spektralkanälen gesammelte Licht vom gleichen Flächenbereich des Wertdokuments synchron vom Detektor erfasst wird und durch wiederholte Messung ortsaufgelöste Messsignale gebildet werden, wobei die Spektralkanäle gleichzeitig parallel ausgelesen werden.

Weiterhin umfasst die Erfindung ein Kodiersystem zur Unterscheidung von Wertdokumenten mit dem erfindungsgemäßen Sensor, wobei die Wertdokumente mit Merkmalsstoffen oder Mischungen von Merkmalsstoffen markiert werden welche Markermoleküle umfassen, die starke Ramansignale in einem oder mehreren Spektralbereichen mit jeweils einem spektralen Abstand von mehr als 50 cm⁻¹, bevorzugt mehr als 100 cm⁻¹, insbesondere mehr als 200 cm⁻¹, aufweisen, wobei zur Unterscheidung der einzelnen Merkmalsstoffe die Stärke bzw. das Vorhandensein/ Nichtvorhandensein von Signalen der einzelnen Bereiche herangezogen wird.

Es zeigt:
- Fig. 1: eine Banknotensortiervorrichtung mit einem Ramansensor,
- Fig. 2: veranschaulicht in einer schematischen Querschnittsansicht den Aufbau und die Anordnung der optischen Komponenten eines besonders kompakt ausgestalteten Ramansensors nach einem Ausführungsbeispiel der vorliegenden Erfindung,
- Fig. 3A, B: veranschaulichen jeweils in schematischer Ansicht einen Teilbereich von alternativen Ausführungsformen des Ramansensors,
- Fig. 4: eine schematische Darstellung zur Auslesung der Intensitätsdaten aus einem Detektor des Ramansensors,
- Fig. 5A, B: veranschaulicht in einer schematischen Aufsicht (5A) sowie Querschnittsansicht (5B) den Aufbau einer Ausführungsform eines Eintrittsspaltmoduls des Ramansensors mit integrierter Filterung des Lichts,
- Fig. 6A: veranschaulicht schematisch in einer Aufsicht die Rückseite einer Ausführungsform des Eintrittsspaltmoduls mit integriertem Wellenlängen- und/oder Intensitätsmonitor der Rayleigh-gestreuten Anregungsstrahlung,
- Fig. 6B, C: veranschaulichen schematisch in Querschnittsansicht verschiedene Ausführungsformen des Eintrittsspaltmoduls mit integriertem Wellenlängen- und/ oder Intensitätsmonitor der Rayleighgestreuten Anregungsstrahlung, und
- Fig. 7A-D: untergrundkorrigierte Intensitätsdaten verschiedener Merkmalsstoffe in 32 Spektralkanälen.

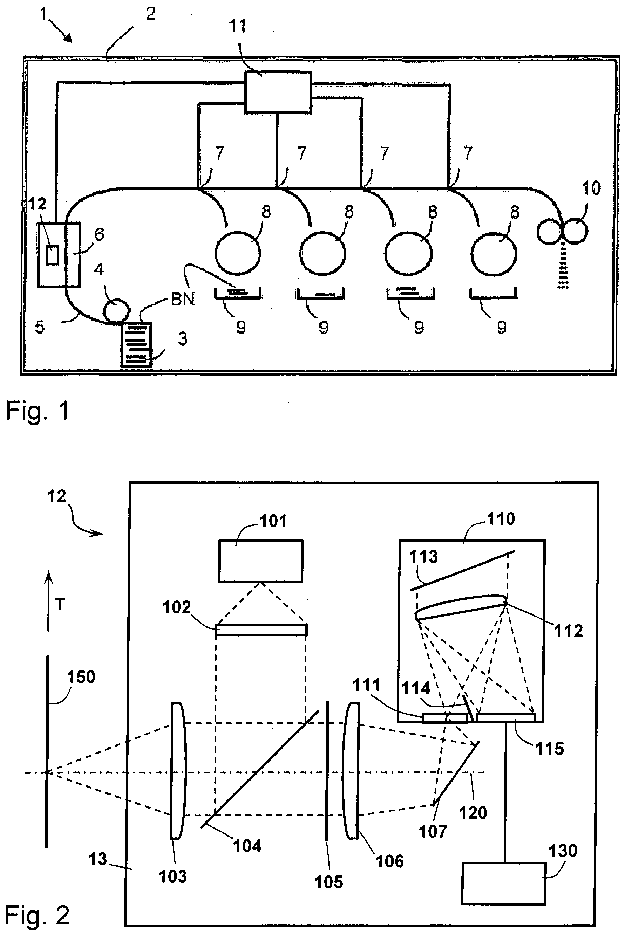

In der Fig. 1 ist in exemplarischer Weise eine solche Banknotensortiervorrichtung 1 abgebildet. Die Banknotensortiervorrichtung 1 weist dabei in einem Gehäuse 2 ein Eingabefach 3 für Banknoten BN auf, in das zu bearbeitende Banknoten BN entweder manuell von außen eingegeben oder Banknotenbündel automatisch, gegebenenfalls nach einer vorhergehenden Entbanderolierung zugeführt werden können. Die in das Eingabefach 3 eingegebenen Banknoten BN werden durch einen Vereinzeler 4 vom Stapel vereinzelt abgezogen und mittels einer Transporteinrichtung 5 durch eine Sensoreinrichtung 6 hindurchtransportiert. Die Sensoreinrichtung 6 kann dabei eine oder mehrere in einem gemeinsamen Gehäuse integrierte oder in separaten Gehäusen angebrachte Sensormodule aufweisen. Die Sensormodule können dabei z.B. zur Prüfung der Echtheit und/ oder des Zustands und/ oder des Nennwerts der geprüften Banknoten BN dienen. Nach Durchlauf durch die Sensoreinrichtung 6 werden die geprüften Banknoten BN dann in Abhängigkeit von den Prüfergebnissen der Sensoreinrichtung 6 und von vorgegebenen Sortierkriterien über Weichen 7 und zugehörige Spiralfachstapler 8 in Ausgabefächer 9 sortiert ausgegeben, aus denen sie gegebenenfalls nach vorheriger Banderolierung bzw. Verpackung entweder manuell entnommen oder automatisch abtransportiert werden können. Es kann auch ein Schredder vorgesehen sein, um als echt und nicht mehr umlauffähig klassifizierte Banknoten BN zu zerstören. Die Steuerung der Banknotensortiervorrichtung 1 erfolgt dabei mittels einer EDV-unterstützten Steuerungseinheit 11. Wie bereits erwähnt wurde, kann die Sensoreinrichtung 6 unterschiedliche Sensormodule aufweisen. Ausgezeichnet ist die Sensoreinrichtung 6 dabei insbesondere durch ein Sensormodul 12 (Fig. 2) zur Prüfung von Raman-gestreutem Anregungslicht, das nachfolgend kurz Ramansensor 12 genannt wird.

Der Ramansensor 12 weist im speziellen in einem gemeinsamen Gehäuse 13 sowohl eine Laserquelle 101 zur Anregung von Raman-Streustrahlung, optische Elemente wie Linsen 102, 103, 106 und Filter 105 als auch ein Spektrometer 110 auf, das mindestens einen Detektor 115 zur spektral zerlegten Erfassung des Raman-gestreuten Lichts aufweist. Das Gehäuse 13 weist zur Auskopplung der Anregungsstrahlung sowie zur Einkopplung des gestreuten Lichts eine Öffnung auf, die optional mit einem geeigneten Fenster mit hoher Transmission im relevanten Spektralbereich verschlossen werden kann. Das Fenster weist weiter optional eine oder zwei Antireflexbeschichtung(en) auf. In einer Ausführungsform kann das Fenster auch eine nichtplanare Oberfläche in Form einer lichtbrechenden Linse annehmen. Die Innenwände des Gehäuses sind bevorzugt schwarz gefärbt, wobei sich dies auf geringe Reflektivität im gesamten relevanten Spektralbereich bezieht, insbesondere unter Einschluss des NIR-Bereichs. Zu prüfende Banknoten werden in Transportrichtung T am Ramansensor 12 vorbei transportiert.

In einer Ausführungsform ist direkt gegenüber des Ramansensors 12 ein mechanischer Anschlag montiert, der die Position der bewegten Banknoten relativ zur Fokuslage des Sensors beschränkt bzw. stabilisiert. So können die bei hohen Geschwindigkeiten von z.B. 10m/s und mehr häufig auftretenden Flatterbewegungen der Banknoten und die in diesem Zusammenhang auftretenden Variationen der Fokuslage vermieden werden. Dadurch wird die Zuverlässigkeit und Genauigkeit der Raman-Messung erhöht.

In einer Beleuchtungseinheit wird das schmalbandige Licht der Laserquelle 101, die bevorzugt einen Halbleiterlaser umfasst, auf das zu prüfenden Wertdokument fokussiert. Bevorzugt werden dabei ein oder mehrere Halbleiterlaser mit frequenzselektiven Strukturen verwendet, die eine schmalbandige, bevorzugt monomodige Emission erzeugen und die Emissionswellenlänge stabilisieren. Die frequenzselektiven Strukturen können beispielsweise Gitter mit verteilter Rückkopplung (distrubuted feedback, DFB) oder Spiegel mit verteilter Rückkopplung (distributed Bragg reflector, DBR) oder entsprechend kurze Fabry-Perot Resonatoren aufweisen, wie sie beispielsweise in vertikal oberflächenemittierenden Lasern (vertical cavity surface emitting laser, VCSEL) eingesetzt werden. Da deren maximale Ausgangsleistung typischerweise im Bereich von einigen mW limitiert ist, wird bevorzugt ein Array von mehreren VCSELn zur Erzeugung der Beleuchtungsstrahlung eingesetzt. Die Laser-Lichtquelle des Sensors ist an eine geeignete Wärmesenke angekoppelt und bevorzugt aktiv über ein Peltierelement temperaturstabilisiert. In einer Ausführungsform wird die Lasertemperatur durch einen oder mehrere Temperaturfühler aktiv überwacht, um ein Maß für die Ausgangswellenlänge der Anregungsstrahlung zu erhalten und ggf. zur Auswertung bzw. Korrektur der aufgenommenen Spektren zu verwenden. Optional werden diese Temperaturwerte auch zur aktiven Regelung der Lasertemperatur verwendet. Dies ist erforderlich um einerseits die Laserleistung zu stabilisieren und andererseits die Anregungswellenlänge zu stabilisieren, da die Laserwellenlänge von DFB-Lasern oder VCSELn auch im günstigsten Fall eines stabilen Monomodebetriebs mit ca. 0,06 nm/K verschiebt. Um die Anregungswellenlänge um weniger als ±0,5 nm schwanken zu lassen, muss also die Temperatur des Laserchips besser als ±8 K konstant gehalten werden.

Die Laserwellenlänge wird in Abhängigkeit von dem nachzuweisenden SERS- bzw. Raman-Merkmal gewählt. Da die Frequenz der Untersuchungslichts in der Ramanspektroskopie keinen Einfluss auf die relative spektrale Lage der Ramanlinien hat, ist die Anregungswellenlänge im Prinzip frei wählbar (z.B. intensive Laserlinien etc.). Wird jedoch die Anregungswellenlänge so gewählt, dass ein elektronischer Übergang angeregt wird, so kommt es zu einem Verstärkungseffekt bestimmter Ramanlinien (Resonanzeffekt). In einer solchen Resonanz-Ramanspektroskopie werden nur die Schwingungsbanden des Molekülteils verstärkt, die am elektronischen Übergang beteiligt sind.

Kurze Anregungswellenlängen im blauen/grünen besitzen den Vorteil einer mit proportional zu 1/λ⁴ steigenden Intensität des Raman-gestreuten Lichts, können aber unter Umständen auch effizient Fluoreszenzen anregen, die dann als intensiver Untergrund die selektive Detektion der Raman-Signale stören. Damit spielt auch die Umgebung des Raman-Merkmals (Substrat, Druckfarben, etc.) bei der Auswahl der Anregungswellenlänge eine Rolle. Bevorzugt werden Wellenlängen in der Nähe von 1064 nm, 980 nm, 808 nm, 785 nm, 760 nm 670 nm, 630 nm, 532 nm, 445 nm, 405 nm oder 380 nm gewählt.

Alternativ zum Einsatz eines Halbleiterlasers kann auch ein externer, fasergekoppelter Laser verwendet werden der an der Position der Laserdiode statt dessen über einen Faserkoppler in den Sensor eingekoppelt wird. Damit steigt zwar das Volumen der Baugruppen an, dafür entstehen aber Vorteile hinsichtlich Laserleistung, Strahlqualität, Wellenlängenauswahl oder Frequenzstabilität.

Der Laser kann entweder gepulst oder kontinuierlich (cw) betrieben werden, im Interesse einer stabilen (d.h. chirp-freien) Anregungswellenlänge ist jedoch cw-Betrieb bevorzugt.

Das Licht des Anregungslasers 101 wird ggf. mit einer Auskoppeloptik Astigmatismus-korrigiert und mit einer oder mehreren Linsen 102 sowie ggf. zusätzlichen Blenden in ein Parallelstrahlbündel abgebildet. Dieses wird über einen Strahlteiler 104 in den Hauptstrahlengang 120 eingekoppelt und mit einem Linsensystem 103 auf die zu prüfende Banknote 150 fokussiert. Diese Blenden sind bevorzugt absorbierend ausgeführt, um unkontrolliertes Streulicht zu vermeiden bzw. dessen Intensität zu minimieren. In einer bevorzugten Ausführungsform besteht das Linsensystem 103 aus einer einzigen Linse.

Die Laserleistung auf der Banknote liegt im Bereich von 1 mW bis 10 W, bevorzugt 10 mW bis 1 W.

In einer bevorzugten Ausführungsform hat der Fokusfleck eine Ausdehnung von weniger als 5 mm, etwa 4 mm × 2 mm oder 2 mm × 0,5 mm oder 1 mm × 0,3 mm. Dabei ist die längere Achse des Fokusflecks bevorzugt senkrecht zur Bewegungsrichtung der Banknote orientiert, was eine höhere Ortsauflösung in Bewegungsrichtung erlaubt. Die Größe des Fokusflecks orientiert sich bevorzugt an den Abmessungen eines Eintrittsspalts, bzw. überstrahlt diesen geringfügig um beispielsweise 20 %. Durch eine derartige Auslegung wird die Abhängigkeit des gemessenen Signals vom exakten Abstand der Banknote relativ zum Ramansensor 12 vorteilhaft reduziert.

Die Leistungsdichte im Fokusbereich liegt bei 0,1 W/cm² bis 10 kW/cm², bevorzugt bei 5 W/cm² bis 2 kW/cm². Dabei wird die sinnvoll verwendbare Leistungsdichte nach oben u.a. durch die Zerstörschwellen der zu prüfenden Banknoten, d.h. des Substrats, der Druckfarben oder der Merkmalstoffe selbst beschränkt. Diese Zerstörschwellen können stark von der Wellenlänge abhängig sein.

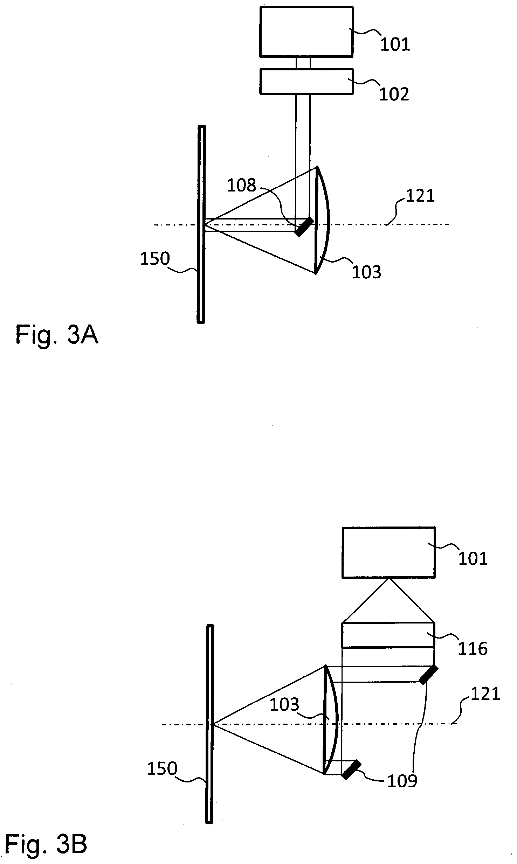

In einer anderen Ausführungsform erfolgt die Einkopplung der Anregungsstrahlung nicht über einen dichroitischen Strahlteiler, sondern über einen herkömmlichen Spiegel. Dabei wird der Strahlengang des Anregungslichts und des von der Banknote gestreuten Lichts über die Spiegelgeometrie entkoppelt. Wie in Fig. 3A schematisch dargestellt ist der Einkoppelspiegel 108 hinter dem Linsensystem 103 positioniert und viel kleiner als der Linsendurchmesser. Damit geht nur wenig des gestreuten Lichts durch Ausspiegelung verloren. Die Trennung zwischen Raman- und Rayleigh-gestreutem Licht findet hierbei mit dem hier obligatorischen Filter 105 statt, der sowohl als Kantenfilter oder als Notchfilter ausgeführt sein kann. Da das Anregungslicht als Parallelstrahlbündel ohne Linse direkt auf die Banknote gerichtet wird, werden mögliche Probleme durch Variationen der Fokuslage für die Anregung vermieden. Der weitere Strahlengang zur Sammlung, spektralen Zerlegung und Detektion des gestreuten Lichts erfolgt analog zur Beschreibung zur Fig. 2.

Alternativ kann die Einkoplung des Anregungslichts über einen kleinen Spiegel auch vor dem Linsensystem 103 erfolgen, was wiederum eine Fokussierung des Anregungslichtes zur Folge hat.

In einer anderen Ausführungsform erfolgt die Beleuchtung mit dem Anregungslicht in einer ringförmigen Geometrie. Dies ist in Fig. 3B schematisch veranschaulicht. Hier wird durch eine strahlformende Laseroptik 116 ein torus- bzw. ringförmiger Strahlquerschnitt erzeugt, der anschließend durch einen elliptischen Spiegelring über das Linsensystem 103 auf die Banknote fokussiert wird. Zu diesen Ausführungsformen analoge Beleuchtungsgeometrien lassen sich auch mit fasergekoppelten Laserquellen erzeugen, wenn die Faserkoppler geeignet positioniert werden. In einer weiteren Ausprägung kann in den verschiedenen genannten Ausführungen der Beleuchtung über eine geeignet ausgelegte Optik bei Komponente 102 das Licht eines zweiten Anregungslasers mit anderer Wellenlänge eingekoppelt werden. Der weitere Strahlengang zur Sammlung, spektralen Zerlegung und Detektion des gestreuten Lichts erfolgt analog zur Beschreibung zur Fig. 2.

Auf der Banknote 150 wird das Anregungslicht Rayleigh- sowie Ramangestreut. Dabei wird die Intensität des zurückgestreuten Lichts deutlich vom Rayleigh-gestreuten Anteil dominiert. Beide Streulichtanteile werden von dem Linsensystem 103 als Parallelstrahl auf den Strahlteiler 104 gelenkt.

Der Strahlteiler 104 ist in einer bevorzugten Ausführungsform als dichriotischer Strahlteiler mit einem mehrlagigem Reflexionsfilter beschichtet, der unter dem verwendeten Anstellwinkel, z.B. nahe 45°, als Kantenfilter wirkt. Dabei besteht unter dem gewählten Einfallswinkel ein hoher Reflexionsgrad, z.B. bevorzugt größer als 90 % oder weiter bevorzugt größer als 95 % oder besonders bevorzugt größer als 99 % bzw. >99,9%, für die Anregungswellenlänge, während für das längerwellige, Stokes-verschobene Ramanlicht ein substantiell höherer Transmissionsanteil besteht. Die Transmission für mehr als 300cm⁻¹ Stokes-verschobenes Raman-Licht beträgt mehr als 70%, bevorzugt 80% besonders bevorzugt 90%. In dieser Ausprägung wirkt der Strahlteiler 104 neben der geometrischen Einkopplung des Lichtstrahls gleichzeitig vorteilhaft an der Unterdrückung des Anregungslichts im Detektor mit.

In einer bevorzugten Ausführungsform wird der Parallelstrahl mit Raman-Licht sowie deutlich reduziertem Anteil an Rayleigh-Licht über einen oder mehrere optionale weitere Filter 105 mit einer weiteren Linse 106 über einen Umlenkspiegel 107 auf ein Eintrittsspaltmodul 111 abgebildet.

Die/der weitere Filter 105 wirkt in einer Ausführungsform als Absorptionsfilter. Dies vermeidet die Gefahr, dass sich durch Interferenzeffekte aufgrund von Mehrfachreflexionen die kombinierte Filterwirkung der beiden Interferenzfilter 104, 105 gegenüber der der Einzelfilter reduzieren könnte. Die/der weitere Filter 105 wirkt in einer anderen Ausführungsform als Interferenzfilter, insbesondere als Kantenfilter und dient dazu das vom schrägstehenden Strahlteiler bzw. Filter 104 nur unzureichend blockierte Rayleigh-gestreute Anregungslicht zu filtern. In diesem Zusammenhang kann auch ein oder mehrere Polarisationsfilter zusätzlich in den Strahlengang eingeführt werden, um die u.U. recht starke Polarisationsabhängigkeit des schrägstehenden Strahlteilers 104 zu kompensieren. Dazu kann in einer Ausführungsform ein linearer Polarisationsfilter zwischen Linse 103 und Banknote 150 angebracht werden, der nicht nur das linear polarisierte Laserlicht der Anregungsstrahlung passieren lässt sondern auch den depolarisierten Anteil des gestreuten Lichts blockiert. Alternativ kann der Polarisationsfilter zusammen mit dem Filter 105 positioniert werden, der dort ebenso das vom Strahlteiler ggf. unzureichend gefilterte Licht bei der Laserwellenlänge reduziert.

In einer anderen Ausführungsform entfällt der Umlenkspiegel 107 und das Licht wird direkt auf das Eintrittsspaltmodul 111 des nun um 90° gedreht im Hauptstrahlengang 120 angeordneten Spektrometers 110 abgebildet.

In einer weiteren Ausführungsform wird der Umlenkspiegel 107 gleichzeitig als Remissionsmonitor eingesetzt. Wenn das Anregungslicht im Empfindlichkeitsbereich von Silizium liegt, d.h. in einem Wellenlängenbereich von ca. 350 -1050 nm, je nach Siliziumsubstrat, kann eine Siliziumfotodiode mit geeigneten dielektrischen Schichten versehen werden, die die nachzuweisende Raman-Strahlung reflektieren und das Anregungslicht jedoch transmittieren. Mit einem solchen Spiegel/Strahlteiler kann zum einen die Trennung des Anregungslichts vom nachzuweisenden Licht verbessert werden (je nach Güte der Schicht) und zusätzlich das Anregungslicht quantitativ erfasst werden. Dieser Strahlteiler hat somit auch die Funktion eines Remissionskanals, der das Anregungslicht, das von der BN remittiert wird nachweist. Ein solcher Aufbau hat auch den weiteren großen Vorteil, dass das im Spektrometer bzw. Detektor störende Anregungslicht absorbiert wird und somit nicht weiter im Sensor herumgespiegelt wird.

In anderen Ausführungsformen wird explizit ein dezidierter Detektor für die Aufnahme der Intensität des remittierten, d.h. Rayleigh-gestreuten Lichts vorgesehen.

Im Spektrometer 110 wird das Licht vom Eintrittsspalt des Eintrittsspaltmoduls 111 durch ein Linsensystem 112 auf ein Reflexions-Beugungsgitter 113 abgebildet, dort spektral zerlegt und nach erneuter Fokussierung durch das Linsensystem 112 auf einen Detektor 115 abgebildet. Das Linsensystem 112 kann dabei entweder aus einer einzelnen asphärische oder sphärischen Linse bestehen, oder mehrere Linsen zur Korrektur verschiedener Abbildungsfehler umfassen.

In einer alternativen Ausführungsform kann die Kombination aus einem planaren Gitter 113 und Linsensystem 112 durch ein abbildendes konkaves Gitter ersetzt werden, das beide Funktionen gemeinsam übernimmt.

Für den Fall dass die Unterdrückung des Anregungslichts durch die Filter 104 bzw. 105 nicht vollständig erfolgt sondern dieses nur deutlich abgeschwächt wurde, wird dieses auch ins Spektrometer 110 gelangen. Dort muss nun mit diesem Licht ebenfalls sehr sorgfältig umgegangen werden, damit es nicht als Streustrahlung die Messung beeinträchtigt. Zum einen werden alle Ordnungen (0te, -1te, -2te; 2te,...) gezielt durch Strahlfallen, schwarze Wände, etc. absorbiert. In einer bevorzugten Ausführungsform wird das Anregungslicht das in der ersten Ordnung (oder analog minus ersten) gebeugt wird, direkt wieder auf den Spalt abgebildet. Damit wird dieses Licht wieder aus dem Spektrometer 110 hinausgespiegelt und kann somit nicht mehr im Spektrometer 110 stören. Dennoch sollte versucht werden, auch dieses Licht innerhalb des Ramansensors 12 gezielt zu absorbieren. Durch die spektrale Nähe des Stokes-verschobenen Ramanlichts zum Anregungslicht muss der Detektor 115, der das Ramanlicht nachweisen soll, sehr nahe am Eintrittsspalt liegen. Das hat den Vorteil, dass Abbildungsfehler minimiert werden und der Aufbau damit sehr kompakt werden kann. Dabei ist jedoch zu bedenken, dass bei der Abbildung des Anregungslichtes auch Abbildungsfehler zu berücksichtigen sind. Auch wenn ein Fuß von nur 0,1 % zu beobachten wäre, kann dies zu Störungen in Pixeln des Detektors 115 führen, die direkt neben dem Eintrittsspalt liegen.

Hier kann im Spektrometer 110 durch entsprechend positionierte lichtabsorbierende Wände 114 störendes Streulicht absorbiert werden und damit der Untergrund der Messung reduziert werden.

Alternativ kann das Anregungslicht auch gezielt in eine Strahlfalle innerhalb oder außerhalb des Spektrometers 110 geleitet werden, in der das Licht natürlich auch nachgewiesen werden kann. Dies kann auch spektral aufgelöst erfolgen. In einer Strahlfalle können natürlich auch Absorptionsfilter zum Einsatz kommen.

Das hinreichend abgeschwächte Anregungslicht könnte auch mit dem Detektor 115 nachgewiesen werden. Dies bietet den Vorteil, dass damit direkt der spektrale Abstand zu den nachzuweisenden Linien gemessen und evtl. auftretende Wellenlängenverschiebungen von einer Auswerteeinrichtung 130 korrigiert werden können. In einer weiteren Ausführungsform wird auf dem Detektor 115 ein beschichteter Absorptionsfilter angebracht, der nochmals die zu detektierende Anregungsstrahlung dämpft.

Der Detektor 115 weist bevorzugt eine Detektorzeile aus mehreren in Reihe angeordneten photosensitiven Pixeln, d.h. Bildpunkten, auf und ist für die gute Ortsauflösung des erfindungsgemäßen Ramansensors 12 von weniger als 2 mm ausgelegt. Da für die Wertdokumente Transportgeschwindigkeiten von bis zu 12 m/s auftreten können, steht bei einer räumlichen Auflösung von 2mm im ungünstigsten Fall nur eine Zeit von ca. 160 µs für die Messung des gesamten Spektrums zur Verfügung. Selbst bei einer reduzierten Ortsauflösung von 5 mm stehen nur maximal 410 µs für die Messung des Spektrums zur Verfügung. Der Detektor 115 wird entsprechend für eine Auslesezeit von kleiner als 500 µs, bevorzugt kleiner als 100 µs ausgelegt. Da schwache Signale mit kurzen Integrationszeiten aufgenommen werden sollen, wurde die Etendue des Systems optimiert. Dazu wird die Querschnittsfläche, d.h. der Eintrittsspalt relativ groß gewählt. Dies hat direkte Auswirkungen auf den Detektor bzw. auf die abgetastete Fläche auf der Banknote.

In einer bevorzugten ersten Ausführung wird ein besonders empfindlicher und lichtstarker Ramansensor 12 mit weniger als 100 Spektralkanälen verwendet.

Hier wird eine relativ großer Eintrittsspalt mit Abmessungen von beispielsweise 2×0,5 mm² verwendet. Die Spaltbreite wird im Bereich von 0,2 mm bis 1 mm gewählt, die Spaltlänge beträgt das 1,5- bis 10-fache davon. Das deutlich von 1 abweichende Aspektverhältnis des Eintrittsspalts trägt dazu bei, viel Licht auf den Pixeln des Detektors 115 gesammelt wird, ohne dabei die spektrale Auflösung zu stark zu reduzieren, da hier die Breite der Pixel in Dispersionsrichtung klein gehalten werden kann.

Die Spaltabmessungen legen in dem lichtoptimierten System näherungsweise auch direkt die Größe jedes einzelnen Pixels fest. Um den Beschränkungen durch den sinnvoll verfügbaren Bauraum des Spektrometers 110 sowie die auftretenden Abbildungsfehler Rechnung zu tragen wird bei einer Spaltgröße in der Größenordnung von 1 mm die Anzahl der Pixel des Detektors 115 auf weniger als 100 begrenzt. In einer besonders bevorzugten Ausführungsform werden 32 Spektralkanäle und damit 32 Pixel für den Detektor 115 gewählt.

Der Detektor 115 umfasst eine der Anzahl der Spektralkanäle entsprechende Anzahl von Pixeln mit einer relativ großen Pixelfläche und einem gegenüber Standarddetektoren verkleinertem Anteil von nicht fotosensitiven Bereichen zwischen den Pixeln. Während Standard CCD-Zeilen Pixelabmessungen von z.B. 15 µm oder 30 µm aufweisen, liegen hier die Abmessungen im mm-Bereich. Dies hat den Vorteil, ein deutlich größeres Signal/RauschVerhältnis als mit konventionellen CCD-Detektorzeilen zu erzielen.

Vorzugsweise werden die Detektorzeilen in dieser Ausführungsform so konstruiert, dass sie lediglich zwischen 10 und 100, besonders bevorzugt zwischen 15 und 50 einzelne Pixel in oder auf einem Substrat aufweisen. Die einzelnen Pixel können Abmessungen von zumindest 0,5 mm × 0,75 mm, vorzugsweise von 0,5 mm × 1 mm, besonders bevorzugt von 0,7 mm × 2 mm haben. Bevorzugt ist das Aspektverhältnis der Pixelabmessungen an das Aspektverhältnis von größer 1,5 des Eintrittsspalts angepasst. Dabei können die Abmessungen der einzelnen Pixel unterschiedlich sein, z.B. in manchen Positionen bzw. Spektralbereichen doppelt oder dreimal so groß wie in anderen Positionen. Dies erlaubt die Überwachung von bestimmten Spektralbereichen mit unterschiedlicher spektraler Auflösung und kann die Herstellungskosten des Sensors reduzieren.

Vorteilhafterweise ist auch die Größe und Form des Beleuchtungsflecks an die Größe und Form des Eintrittsspalts angepasst, um möglichst wenig des erzeugten Ramanlichts durch die Abbildung des Leuchtflecks auf den Eintrittsspalt zu verlieren.

Je nach spektral zu erfassendem Wellenlängenbereich können die Pixel des Detektors 115 in den genannten Fällen aus einem unterschiedlichen Material bestehen. Für Ramanmessungen im ultravioletten oder sichtbaren Spektralbereich sind Detektoren aus Silizium, die für Wellenlängen unterhalb von etwa 1100 nm empfindlich sind, und zur Messung im infraroten Spektralbereich aus InGaAs besonders geeignet, die für Wellenlängen oberhalb von 900 nm empfindlich sind. Vorzugsweise wird eine derartige InGaAs-Detektorzeile direkt auf einem Siliziumsubstrat aufgebracht sein, das besonders bevorzugt eine in Siliziumtechnik hergestellte Verstärkerstufe zur Verstärkung der analogen Signale der Pixel der InGaAs-Detektorzeile aufweist. Hierdurch ist ebenfalls ein besonders kompakter Aufbau mit kurzen Signalwegen und erhöhtem Signal/Rausch-Verhältnis gegeben.

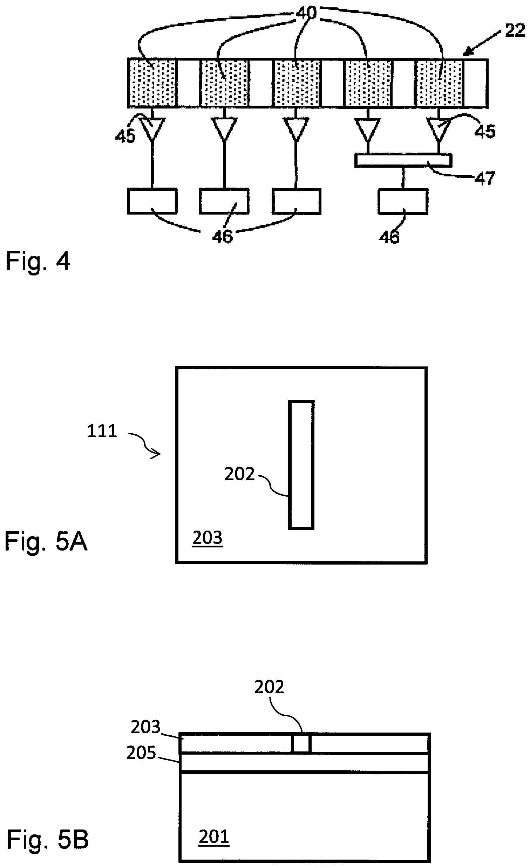

Eine Auslesung der einzelnen Pixel des Detektors 115 kann dabei z. B. mit Hilfe eines Schieberegisters seriell erfolgen. Vorzugsweise erfolgt allerdings eine parallele Auslesung einzelner Pixel und/ oder Pixelgruppen. Nach dem Beispiel der Fig. 4 werden die drei linken Pixel 40 jeweils einzeln ausgelesen, indem die Messsignale dieser Pixel 40 mit Hilfe je einer Verstärkerstufe 45, die z.B. Bestandteil des Siliziumsubstrats sein kann, verstärkt und je einem Analog/Digitalwandler 46 zugeführt. Die beiden rechten Pixel in der schematischen Darstellung der Fig. 4 wiederum werden zuerst mittels separater Verstärkerstufen 45 verstärkt, dann einer gemeinsamen Multiplexeinheit 47, die gegebenenfalls auch eine Sample- & Hold-Schaltung umfassen kann, und dann einem gemeinsamen Analog/ Digitalwandler 46 zugeführt, der mit der Multiplexeinheit 47 verbunden ist. Das hierdurch ermöglichte parallele Auslesen von mehreren Pixeln 40 bzw. Pixelgruppen ermöglicht kurze Integrationszeiten und eine synchronisierte Messung der Banknote. Diese Maßnahme trägt ebenfalls zu einer Erhöhung des Signal-/ Rausch-Verhältnisses bei.

In einer zweiten Ausführung wird ein Ramansensor 12 mit einer relativ hohen Spektralauflösung verwendet, das allerdings gegenüber der ersten Ausführungsform eine etwas reduzierte Empfindlichkeit aufweist.

Hier wird ein Eintrittsspalt mit Abmessungen im Bereich von 25µm × 250µm bis 100µm × 1mm verwendet. Das deutlich von 1 abweichende Aspektverhältnis des Eintrittsspalts trägt wieder dazu bei, viel Licht auf den Pixeln des Detektors 115 zu sammeln ohne dabei die spektrale Auflösung stark zu reduzieren, da hier die Breite der Pixel in Dispersionsrichtung klein gehalten werden kann. Bevorzugt wird eine Spaltbreite gewählt, die das 2- bis 5-fache der Pixelbreite auf dem Detektor 115 beträgt.

Als Detektor 115 wird eine schnell auslesbare CCD-Kamera mit synchroner Integrationszeit, bevorzugt eine CCD-Zeilenkamera verwendet um das durch bewegte Objekte hervorgerufene Phänomen des "Image-smearing" zu vermeiden. Dies würde im Ramansensor 12 zu einer räumlich/spektralen Verschmierung der Intensitätswerte führen.

Bevorzugt wird dafür eine sogenannte Interline- bzw. Frame-Transfer Architektur gewählt, bei der die von den einzelnen Pixeln bzw. Photodioden gesammelten Ladungen sehr schnell in einen optisch dicht abgedunkelten Bereich aus Speicherpixeln verschoben werden, in denen sie anschließend seriell über ein herkömmliches Schieberegister ohne Verfälschung der Spektralinformation durch weitere Akkumulation in den später ausgelesenen Pixeln ausgelesen werden können. In einer anderen Ausführungsform wird ein CCD-Chip mit hoher Lesegeschwindigkeit (größer 30MHz) und elektronischer Shutterfunktion verwendet, die eine Beeinflussung der akkumulierten Ladungen während des Auslesens verhindert.

In besonderen Ausführungsformen kommen sog. TDI- (time domain integration) CCD-Zeilensensoren zum Einsatz, bei denen durch eine geeignete zeilenweise Verschiebung der Ladungspakete auf dem CCD-Detektorchip synchron zur Bewegung der Abbildung des Fokuspunkts auf der bewegten Banknote eine mehrstufige Akkumulation der Ladungen und damit Verstärkung über mehrere (z.B. 4 oder 16) Zeilentakte erreicht wird. Dabei wird vermieden, dass das detektierte Signal durch die Bewegung des abgebildeten Objekts über dessen Strukturen wie z.B. sichtbare Bedruckung etc. verschmiert wird. Dies ist insbesondere bei der Detektion von räumlich strukturierten Codierungen wie z.B. Barcodes entscheidend.

In einer weiteren Ausführungsform wird eine schnell auslesbare CMOS-Kamera mit aktiver Pixelansteuerung und synchroner Auslesung verwendet. Auch hier wird bevorzugt ein Zeilensensor mit hoher Lesegeschwindigkeit verwendet.

Alternativ zur Zeilenkamera kann auch eine Kamera mit 2D Array verwendet werden, vorausgesetzt dass die Auslesung der einzelnen Zeilen (d.h. Spektren) synchron und hinreichend schnell erfolgt. Dies erlaubt dann eine Mittelung über die verschiedenen Zeilen zur Verbesserung des Signal/ Rausch-Verhältnisses oder alternativ eine direkte Ortsauflösung senkrecht zur Bewegungsrichtung.

Der Ramansensor 12 ist in einer Ausführungsform dafür ausgelegt, Ramanlicht mit einer Stokes-Verschiebung von 100cm⁻¹ bis 4000cm⁻¹ aufzunehmen. In einer weiteren Ausführungsform ist der Ramansensor 12 dafür ausgelegt, Ramanlicht mit einer Stokes-Verschiebung von 1000 cm⁻¹ bis 3600 cm⁻¹ mit einer etwas höheren spektralen Auflösung aufzunehmen. Der größere spektrale Abstand zur Laserlinie vereinfacht in diesem Fall die Unterdrückung des Anregungslichtes. In einer weiteren Ausführungsform ist der Ramansensor 12 dafür ausgelegt, Ramanlicht mit einer Stokes-Verschiebung von 1800 cm⁻¹ bis 2600 cm⁻¹ mit einer besonders hohen spektralen Auflösung, insbesondere besser als 35 cm⁻¹, bevorzugt besser als 25 cm⁻¹ aufzunehmen.

In besonderen Ausführungsformen kann das Eintrittsspaltmodul 111 des Spektrometers vorteilhaft mehrere Funktionen kombiniert erfüllen. Zum einen definiert es durch seine geometrischen Abmessungen den Eintrittsspalt, zum anderen kann eine weitere Filterfunktion dort integriert werden und/ oder eine Messung der Wellenlänge bzw. Leistung des Anregungslasers vorgenommen werden.

In Fig. 5A ist schematisch eine Aufsicht bzw. in Fig. 5B eine Querschnittsansicht einer Ausführungsform des Eintrittsspaltmoduls 111 mit kombinierter Filterwirkung dargestellt. Dieses umfasst hier ein für das Ramanlicht zumindest in einigen Spektralbereichen transparentes Trägersubstrat 201, das mit einer sowohl für das Anregungslicht als auch das Ramanlicht opaken Schicht 203 beschichtet ist. Diese Schicht wirkt bevorzugt absorbierend für die Spektralbereiche des Anregungs- sowie Ramanlicht, um unkontrollierte Reflexionen im Sensor zu verhindern. Die opake Schicht kann dabei absorbierende Farben, Metalle wie z.B. Cr, Ti, Ni, etc. sowie deren Oxide, Sulfide, und/oder Breitbandabsorber wie z.B. Kohlenstoff (Ruß) umfassen. In die Schicht 203 wird eine Öffnung, die als Eintrittsspalt 202 wirkt, strukturiert. Dies kann entweder additiv durch Aufdrucken oder Aufdampfen z.B. in Schattenmaskentechnik erfolgen, oder subtraktiv durch Aufbringen einer geschlossenen Schicht, die in einem zweiten Schritt strukturiert, maskiert und freigeätzt wird.

In einer Ausführungsform wirkt das teiltransparente Substrat 201 selbst als Absorptionsfilter für die Anregungsstrahlung. Dies kann beispielsweise durch Verwendung eines Siliziumkristalls als Substrat für das Eintrittsspaltmodul 111 in Kombination mit einem InGaAs-basierten Detektor 115 erfolgen. Damit kann die Anregungsstrahlung kleiner 1100 nm selektiv absorbiert werden, während die Ramanstrahlung im infraroten Spektralbereich transmittiert wird und vom Detektor 115 nachgewiesen werden kann. Um die Filterwirkung zu verbessern und/ oder gezielt Spektralkurven für die Filterwirkung einstellen zu können können optional eine oder mehrerer weitere Filterschichten 205 aufgebracht werden. Diese können sowohl Dielektrika als auch Absorber umfassen.

In einer anderen Ausführungsform wird im Eintrittsspaltmodul 111 neben der geometrischen Festlegung des Eintrittsspalts eine Messung der Wellenlänge und/ oder der Leistung des Anregungslasers 101 vorgenommen. Diese Informationen werden vorteilhaft zur Regelung bzw. Stabilisierung des Anregungslasers verwendet. Dies kann eigenständig oder in Kombination mit den beschriebenen Ausführungsformen mit Filterwirkung eingesetzt werden.

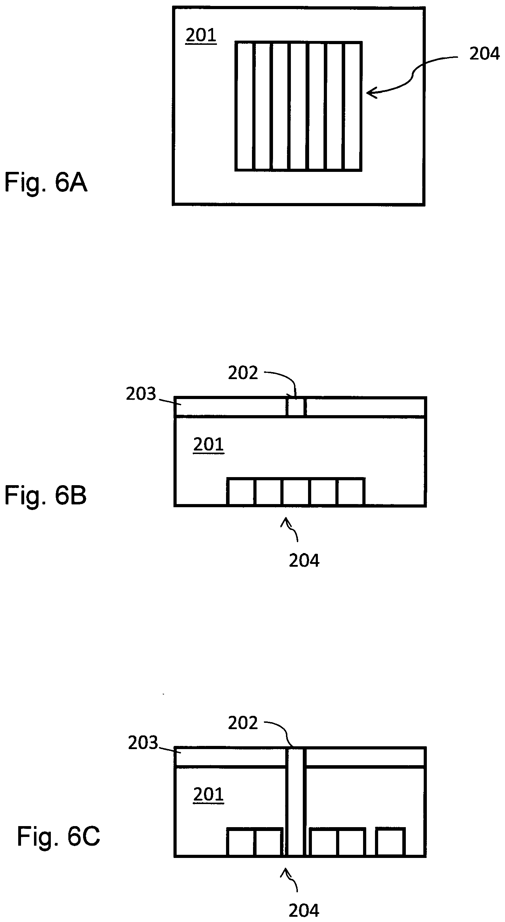

Dabei wird wie in Fig. 6A veranschaulicht auf der dem Eintrittsspalt abgewandten Seite auf oder in dem Substrat eine Anordnung aus Fotodioden 204 gebildet. Im Fall dass das Substrat 201 aus Silizium oder anderen geeigneten Halbleitern besteht, können diese direkt mit den entsprechenden Methoden der Halbleiterfertigung im Substrat 201 gebildet werden. In anderen Fällen wie z.B. im Fall eines Glassubstrats können die Fotodioden entweder in Dünnschichttechnik auf dem Substrat gebildet werden oder alternativ dort montiert werden. Die Wellenlängenmessung der Anregungsstrahlung gelingt dabei durch Auslegung des Spektrometers bzw. dessen Gitter derart, dass die erste Beugungsordnung des Anregungslichts - zumindest bei dessen nominaler Wellenlänge - vom Gitter wieder in sich zurück auf den Eintrittsspalt zurückgeworfen wird. Weicht nun die Wellenlänge der Anregungsstrahlung durch Drifts oder Schwankungen vom nominalen Wert ab, so wird die erste Beugungsordnung nicht mehr genau auf den Eintrittsspalt zurück geworfen sondern in eine leicht abweichende Richtung, die entsprechend von den benachbart angebrachten Fotodioden detektiert wird.

In Fig. 6B wird die Situation in einem Ausführungsbeispiel veranschaulicht, in der die Fotodioden im Substrat 201 positioniert sind und dieses - beispielsweise aus Si gebildet - gleichzeitig als Filter für kurzwellige Anregungsstrahlung wirkt. Das durch den Spalt 202 in der opaken Schicht 203 einfallende Licht wird durch das Substrat 201 gefiltert und die Intensität des von der Banknote Rayleigh-gestreuten (und gefilterten) wird mit dem zentralen Pixel der Fotodiodenanordnung 204 bestimmt. Bei vom Nominalwert abweichender Wellenlänge der Anregungsstrahlung fällt mehr Licht auf die benachbarten Pixel der Fotodiodenanordnung 204, was zur quantitativen Bestimmung der Anregungswellenlänge genutzt werden kann.

Ein derartiges Spaltmodul wird bevorzugt in Kombination mit einem InGaAs-Detektor eingesetzt.

Eine weitere Ausführungsform wird in Fig. 6C schematisch im Querschnitt veranschaulicht. Hier ist ein physikalischer Spalt 202 sowohl durch die opake Schicht 203 als auch durch das komplette Substrat 201 ausgeführt, so dass im Eingangsspaltmodul 111 keine Filterung oder Absorption des einfallenden Lichts stattfindet. Der physikalische Spalt 202 kann beispielsweise durch Ätzen eines entsprechenden Trenches durch das Substrat 201 ausgeführt werden, das z. B. aus Silizium bestehen kann. Diese Ausführungsform wird vorzugsweise dann verwendet, wenn die Wellenlänge der Anregungsstrahlung überwacht werden soll und wenn sowohl Anregungs- als auch Ramanstrahlung im Absorptionsbereich des (Silizium-) Substrats 201 liegen. Alternativ können auch separate Detektorelemente im Spektrometer 110 - unabhängig von der Auslegung des Beugungsgitters 113 - zur Überwachung der Anregungsstrahlung geeignet positioniert werden.

Ausgehend von den gemessenen Intensitätswerten der einzelnen, linear in Wellenlängen (nm) skalierten Spektralkanäle des Ramanspektrums erfolgt in der Auswerteeinheit 130 des Ramansensors 12 eine Verarbeitung und Bewertung der Messdaten. Dazu wird zunächst ein eventuell vorhandener Untergrundanteil bestimmt und von den gemessenen Intenstitätswerten abgezogen, um untergrundkorrigierte Intensitätswerte zu erhalten.

In einer Ausführungsform wird dazu das gleitende Minimum über n Stützstellen der gemessenen Intensitätswerte berechnet. Die Anzahl n der Stützstellen orientiert sich an der gesamten Anzahl der Spektralkanäle sowie der spektralen Auflösung des Messbereichs und wird vorteilhaft so gewählt, dass n die Anzahl der Messpunkte, die einen einzelnen Peak auflösen, übersteigt. Bestehen die typischen (z.B. intensivsten) Raman-Peaks aus beispielsweise drei Messpunkten, so werden bevorzugt mindestens fünf oder mindestens sieben Kanäle zur Berechnung des gleitenden Minimums als Schätzwert für den Untergrund verwendet.

In einer allgemeineren Ausführungsform wird eine gleitende Perzentile, z.B. die niedrigsten 10 %, niedrigsten 30 % oder der Median mit 50 % gewählt um den Verlauf des Untergrundes zu bestimmen. Dies bietet den Vorteil dass einzelne, z.B. durch Rauschen verursachte Ausreißer nicht unmäßig stark ins Gewicht fallen.

In einer weiteren Ausführungsform werden die für die Berechnung des Untergrundes zu verwendenden Stützstellen explizit vorgegeben. Dies bietet den Vorteil, dass damit gezielt Spektralbereiche ausgewählt werden können, bei denen bei einer echten (und druckfrischen) Banknote kein nennenswertes Ramansignal zu erwarten ist. Bevorzugt werden diese im Bereich von 1900-2500 cm⁻¹ gewählt, da in diesem Spektralbereich keiner der bevorzugt zur Markierung verwendeten Merkmalsstoffe Raman-Linien aufweisen. Damit ist eine besonders zuverlässige Bestimmung des Untergrunds möglich.

Nachdem die zum Untergrundabzug zu verwendenden Spektralkanäle mit ihren gemessenen Intensitätswerten ausgewählt wurden, werden diese durch eine polynomiale Anpassung interpoliert und durch Subtraktion der interpolierten Werte von den gemessenen Intensitätswerten die untergrundkorrigierten Messwerte gebildet. Im einfachsten Fall wird für die polynomiale Anpassung eine lineare Anpassung gewählt, in anderen Fällen kann ein Polynom höheren Graden, kubische Splines, etc. gewählt werden.

Im nächsten, optionalen Schritt werden die untergrundkorrigierten Messwerte normiert. Dazu wird in einer Ausführungsform das Maximum der untergrundkorrigierten Messwerte bestimmt und die untergrundkorrigierten Messwerte durch diesen Maximalwert dividiert, so dass normierte untergrundkorrigierte Messwerte erhalten werden die im Intervall [0, 1] liegen.

Anschließend erfolgt in einer Ausführungsform die Auswertung der gemessenen Intensitätswerte dadurch, indem die Peakpositionen des Ramanspektrums bestimmt werden. Dazu wird eine Liste der Kanalindizes der lokalen Maxima im diskreten Messwertearray der Spektralkanäle erstellt. Alternativ wird ein Liste von interpolierten Peakpositionen erstellt. Dazu werden die Scheitelpunkte von Parabeln verwendet, die jeweils durch drei Punkte definiert sind, deren mittlerer zur Anpassung verwendeter Punkt jeweils einem lokalen Maximum der Messwerte entspricht. Mit dieser Methode können noch genauere Spektralpositionen - auch genauer als der nominale spektrale Kanalabstand - bestimmt werden. Dieses Verfahren liefert identische Ergebnisse zum ebenso möglichen Verfahren der Bestimmung der interpolierten Nullstellen der Ableitung.

Nachdem die Peakpositionen des Ramanspektrums bestimmt wurden, erfolgt optional eine Selektion der für die weitere Echtheitserkennung zu verwendenden Peaks. Dabei können entweder nur Peaks mit einer bestimmten Mindestintensitat verwendet werden. Alternativ können nur Peaks mit einer maximalen Halbwertsbreite oder mit einer Halbwertsbreite in einem spezifizierten Bereich zwischen einer unteren und einer oberen Schwelle zur weiteren Auswertung herangezogen werden. Alternativ können nur die k höchsten Peaks zur weiteren Auswertung bzw. zur Echtheitserkennung verwendet werden.

Im weiteren Verlauf der Auswertung bestehen unterschiedliche Möglichkeiten: entweder erfolgt direkt eine Verifikation des gemessenen Ramanspektrums, d.h. ein Abgleich mit einem Referenzspektrum einer echten Banknote bzw. ein Abgleich mit einer Bibliothek verschiedener echter Referenzspektren, oder es wird zunächst eine Klassifikation mit anschließender Verifikation durchgeführt. Ersteres ist besonders vorteilhaft, wenn der Ramansensor ausschließlich für die Echtheitserkennung einer einzigen Stückelung adaptiert ist, d.h. wenn nur ein einziges, starr vorgegebenes Echtheitsmerkmal erkannt werden muss. Letzteres Verfahren bietet sich insbesondere an, wenn etliche unterschiedlichen Währungen sowie unterschiedliche Stückelungen anhand des Ramanspektrums erkannt werden sollen (d.h. Vergleich mit einer ganzen Bibliothek an Raman-Fingerprints), da ein Klassifikationsalgorithmus häufig schneller ist als ein Verifikationsalgorithmus.

Die numerische Klassifikation der (normierten) untergrundkorrigierten Messwerte erfolgt in einer Ausführungsform über eine statistische Klassifikation, z.B. durch die Schätzung der streuenden Punktewolken der einzelnen Klassenmitglieder durch Normalverteilungen. Basierend auf diesen kann die wahrscheinlichste Klassenzugehörigkeit ermittelt werden, die dann mit einem Verifikationsalgorithmus verifiziert wird. Alternativ kann ein nächster Nachbar-Klassifikator, Support Vektor Maschinen, ein Polynomklassifikator, ein neuronales Netz, oder eine Fisher-Linear-Diskriminante zur Klassifikation eingesetzt werden. Ebenso kann die Klasse gewählt werden, die die größte Ähnlichkeit bezüglich der Korrelation zwischen dem gemessenen Spektrum und dem Referenzspektrums aufweist. Alle Klassifikationsverfahren können nicht nur auf die Originalkurven (d.h. die normierten untergrundkorrigierten Messwerte), sondern auch auf deren Ableitungen angewandt werden.

Im Allgemeinen erfolgt die Verifikation schließlich durch die Berechnung eines Ähnlichkeitsmaßes zwischen dem gemessenen Ramanspektrum und dem Referenzspektrum. Das Ähnlichkeitsmaß kann ein Euklidscher Abstand, ein quadratischer Euklidscher Abstand, normierter quadratischer Euklidscher Abstand, Manhattan-Abstand, Schachbrett-Abstand, Bray-Curtis-Abstand, Canberra-Abstand, Cosinus-Abstand oder ein Korrelations-Abstand sein.

In einer anderen Ausführungsform können die bestimmten spektralen Positionen der wesentlichen Peaks direkt mit einer Tabelle des Referenzspektrums verglichen werden, d.h es wird geprüft, ob das gemessene Ramanspektrum an genau vorgegebenen Stellen - innerhalb einer Toleranz in Form einer reellen Zahl bei interpolierten Peakpositionen oder einer diskreten Toleranz bei einem Kanal-Index - mit dem Referenzspektrum übereinstimmt. In einer Ausführungsform wird dabei lediglich die spektrale Lage der Peaks verglichen, in anderen Ausführungsformen zusätzlich die relativen oder absoluten Intensitäten.

Dabei kann in einer bevorzugten Ausführungsform eine gleichmäßige Korrektur einer spektralen Kanalverschiebung erfolgen, wie sie beispielsweise durch eine fluktuierende Wellenlänge des Anregungslasers verursacht sein kann. Das Ausmaß der spektralen Verschiebung das zu dieser Korrektur erforderlich ist kann beispielsweise anhand der gemessenen spektralen Lage eines, z.B. des intensivsten Peaks und dem Vergleich zum Sollwert bestimmt werden. Zweckmäßigerweise wird die maximal erlaubte Verschiebung auch noch durch einen Schwellwert beschränkt, um die Echtheitserkennung nicht unnötig aufzuweichen.

Alternativ kann die Verifikation erfolgen, indem geprüft wird ob das gemessene Ramanspektrum an zumindest einzelnen vorgegebenen Stellen Peaks aufweist. Dafür werden vorteilhafterweise die intensivsten Peaks des Ramsnspektrums verwendet. Hier kann ebenso wieder eine reelle oder diskrete Toleranz erlaubt sein um Übereinstimmung zu erkennen.

In einer weiteren Ausführungsform wird überprüft, ob die Korrelation <x, y> / (|x| |y|) zwischen dem gemessenen (untergrundkorrigierten und evtl. normierten) Ramanspektrum und einem Referenzspektrum eine bestimmte Schwelle überschreitet. Dies ist z.B. der Fall wenn die Korrelation größer 0,7 ist, bevorzugt größer 0,8, weiter bevorzugt größer 0,95. Dabei bezeichnet <x, y> das Skalarprodukt zwischen den beiden als Vektoren betrachteten Spektren x bzw. y und | | den Betrag des jeweiligen Vektors.

Alternativ wird die Ableitung des Ramanspektrums und des Referenzspektrums bestimmt und geprüft, ob die Korrelation zwischen diesen eine vordefinierte Schwelle überschreitet.

Bevorzugt wird die Korrelation mehrfach berechnet, wobei die Referenzkurve schrittweise in einem kleinen Bereich spektral verschoben wird. Hierbei erhält man eine Korrelationskurve. Durch das Maximum der Korrelationskurve wird gleichzeitig die optimale Kanalkorrektur zur Korrektur von einer etwaigen Laserdrift des Anregungslasers 101 bestimmt sowie bei hinreichendem Zahlenwert des Korrelationskoeffizienten die Klassenzugehörigkeit verifiziert. Auch hier wird zweckmäßigerweise die maximal erlaubte Verschiebung durch einen Schwellwert beschränkt, um die Echtheitserkennung nicht unnötig aufzuweichen.

In einer besonders bevorzugten Variante kann auch die Wellenlänge des Anregungslasers 101 direkt im Ramansensor 12 gemessen werden und dieser Messwert zur Korrektur der Spektralkanäle verwendet werden. Dies bietet insbesondere bei einem dichten Ramanspektrum mit vielen (im schlimmsten Fall auch noch annähernd gleich hohen) Peaks Vorteile, da andernfalls nicht sicher bestimmt werden kann welcher Peak in welche Richtung verschoben wurde.

Ebenso ist es alternativ möglich, diese Vergleiche bzw. die Berechnung des zur Verifikation verwendeten Ähnlichkeitsmaßes auch mit der Fouriertransformierten der normierten untergrundkorrigierten Messwerte im Vergleich zur Fouriertransformierten des Referenzspektrums durchzuführen.

Da der Anregungslaser 101 des Ramansensors 12 im Interesse einer optimalen Signalintensität bei hohen Leistungen knapp unterhalb der Zerstörungsschwelle arbeitet, werden in einer bevorzugten Ausführungsform zusätzliche Maßnahmen getroffen um eine Beschädigung der zu prüfenden Banknoten sicher zu verhindern.

In einem ersten Schritt wird verhindert, dass im Fall eines Transportfehlers bzw. bei Bildung eines Banknotenstaus eine Banknote 150 dauerhaft im Fokusfleck des Anregungslasers 101 verharrt und dort unzulässig stark erhitzt wird. Dazu wird vorteilhaft das im Ramansensor 12 gewonnene Signal des von der Banknote 150 remittierten bzw. zurückgestreuten Anregungslichts verwendet, das entsprechend des Druckbildes der Banknote 150 moduliert ist. Bleibt das Signal des remittierten Lichts nun über mehrere Messtakte konstant, insbesondere auf eher niedrigem Niveau, so wird ein Banknotenstau erkannt und die Leistung des Anregungslasers 101 reduziert bzw. abgeschaltet. In einer weiteren Ausführungsform ist ein zusätzlicher Remissionssensor bzw. Lichttaster vorgesehen der diese Aufgabe übernimmt. Dazu wird das unter der Beleuchtung von der Banknote remittierte (zurückgestreute und emittierte) Licht gemessen. Bevorzugt tritt nur dann das Anregungslicht aus dem Ramansensor 12 aus, wenn eine Banknote 150 vor dem Ramansensor 12 positioniert ist (z.B. Remission größer 0 oder größer 0,05) und wenn diese nicht ruht, d.h. das Remissionssignal zeitlichen Fluktuationen unterworfen ist.

In einer weiteren Ausführungsform wird die Leistung des Anregungslasers 101 dynamisch auf die aktuellen Absorptionsverhältnisse auf der Banknote 150 angepasst. Dabei wird die Leistung des Anregungslasers 101 zwischen mindestens zwei Leistungsstufen variiert, der nominalen (hohen) Leistung sowie mindestens einer reduzierten Leistungsstufe. Unterschreitet die gemessene Remission einen bestimmten Wert, z.B. größer 0,3 oder größer 0,15, so wird die Leistung des Anregungslasers 101 auf die niedrigere Leistungsstufe reduziert, bei der eine Beschädigung der Banknote 150 ausgeschlossen ist. Da der Anregungslaser 101 nicht völlig ausgeschaltet wird, ist auch am nächsten Messpunkt die Bestimmung der Remission möglich. So kann wieder zur hohen Anregungsleistung zurück gewechselt werden wenn z.B. einer oder mehrere Messpunkte der Remission wieder über einem Einschalt-Schwellwert liegen.

In einer weiteren, bevorzugten Ausführungsform besitzt der Ramansensor 12 eine zusätzliche Messstelle zur Remissionsmessung, die in Bewegungsrichtung der Banknote vor der Messstelle des Ramansensors 12positioniert ist. Damit wird die Remission der Banknote 150 vor der Raman-Messung überwacht und es kann zu jedem Messort auf der Banknote 150 im Voraus bestimmt werden, welche Anregungsleistung dort eingesetzt werden soll, bzw. ob dort überhaupt eine Ramanmessung erfolgen soll. Diese Remissionsmessung erfolgt bevorzugt mit einer Beleuchtungswellenlänge nahe der für die Ramanmessung verwendeten Laserwellenlänge, um repräsentative Remissions- bzw. Absorptionswerte zu erhalten. Damit ist eine Signaloptimierte Raman-Messung möglich, wobei gleichzeitig sichergestellt wird, dass es zu keiner Beschädigung der Banknote 150 kommen kann.

Typische Raman-Molekülschwingungen treten im Bereich von 200 bis 4000 Wellenzahlen (cm⁻¹) auf. Dieser Bereich lässt sich grob in Unterbereiche für Schwingungen spezifischer Gruppen einteilen.

Um ein Raman-Merkmal zu bilden werden die Markermoleküle durch Mahlen oder ggf. durch Adsorption oder Bindung an andere Substrat- oder Matrixstoffe in eine geeignete Partikelform gebracht sowie ggf. verkapselt um sie von Umwelteinflüssen zu schützen.

Um ein SERS-Merkmal zu bilden werden die Markermoleküle in engen (z.B. direkten) Kontakt mit einem metallischen Nanopartikel ("Antenne") gebracht, das über oberflächenplasmonische Effekte zu einer drastischen Verstärkung von Ramansignalen des Markermoleküls führt. Die Kombination von Markermolekülen und Antennen-Partikel wird ggf. verkapselt um sie vor Umwelteinflüssen zu schützen. Für eine nähere Beschreibung von Herstellungsmethoden von SERS-Merkmalen wird z.B. auf EP 0806460 B1 oder WO 2014/022330 A2 verwiesen.

In einer bevorzugten Ausführungsform werden als Markermoleküle organische Moleküle eingesetzt. Diese besitzen u.a. C-H- und C-C-Bindungen welche charakteristische Signale ausbilden. Beispielsweise verursachen die C-H-Schwingungen gesättigter Kohlenstoffgruppen, z.B. bei Molekülen mit Alkylketten, starke Signale im Bereich 2700-3200 cm⁻¹.

Ein starkes Signal im Bereich 2000-2200 cm⁻¹ ist typisch für C-C- oder C-N-Dreifachbindungen, z.B. bei Molekülen mit Nitrilgruppen. Starke Signale ungesättigter C-H-Schwingungen treten typischerweise im Bereich 1300-1800cm⁻¹ auf, z.B. bei Molekülen mit Allylgruppen. Starke Signale aus Schwingungen an denen zwei oder mehr verbundene Kohlenstoffatome beteiligt sind, wie z.B. sogenannte Gerüstschwingungen, können im Bereich 1300-200 cm⁻¹ auftreten. Insbesondere weisen aromatische unsubstituierte Phenylgruppen ein charakteristisches sehr starkes Signal bei 990-1100 cm⁻¹ auf.

Bei einer üblichen (forensischen) Analyse eines hochaufgelösten RamanSpektrums können durch Auswerten geringer Unterschiede der Bandenpositionen oder des Auftretens und der Verhältnisse mehrerer kleiner Banden in diesen Bereichen Rückschlüsse über die Identität des Moleküls getroffen werden bzw. das Molekül identifiziert werden.

Bei der Analyse einer Hochgeschwindigkeitsmessung ist die exakte Molekülidentifikation durch die deutlich verringerte spektrale Auflösung nicht mehr möglich. Hier werden statt dessen eher qualitative Eigenschaften der verwendeten Markermoleküle wie z.B. die Existenz einer starken Phenyl-Bande im Bereich 990-1100 nm, die Existenz einer C-C-Dreifachbindung im Bereich 2040-2080 cm⁻¹, oder die Existenz eines ausgedehnten Bereiches an Alkylschwingungen im Bereich 2800-3000 cm⁻¹ abgefragt und integral quantitativ für die Echtheitserkennung bewertet.

Eine besonders gute Sicherheitserkennung mit starker Diskriminierung gegen Fälschungssubstanzen wird mit dem erfindungsgemäßen Ramansensor dann erreicht, wenn dieser mit seinen Eigenschaften an die verwendeten Merkmalsstoffe angepasst wird und umgekehrt, wenn bei der Auswahl der verwendeten Merkmalsstoffe diese spezifisch im Hinblick auf den Nachweis mit dem Ramansensor ausgewählt werden.

Zur Erstellung eines für die Unterscheidung und Identifikation mit dem erfindungsgemäßen Sensor geeigneten Kodiersystems für Wertdokumente gibt es unterschiedliche bevorzugte Ausführungsformen.

Die Wertdokumente werden dazu mit Merkmalsstoffen oder Mischungen von Merkmalsstoffen markiert, werden welche Markermoleküle umfassen, die starke Ramansignale in einem oder mehreren Spektralbereichen mit jeweils einem spektralen Abstand von mehr als 50 cm⁻¹, bevorzugt mehr als 100 cm⁻¹, insbesondere bevorzugt mehr als 200 cm⁻¹, aufweisen. Dazu werden Markermoleküle mit einer oder mehreren Molekülstrukturen mit konjugierten Mehrfachbindungen, unterschiedlich substituierten Doppelbindungen, einer unterschiedlichen Anzahl an Doppelbindungen, C-C-Dreifachbindungen, unsubstituierten Phenylgruppen, Mercaptanen, S-H-Bindungen, P-H-Bindungen oder Fluorgruppen verwendet.

In einer ersten bevorzugten Ausführungsform wird eine Kodierung durch Auswahl einer Gruppe an Merkmalsstoffen erstellt, welche alle starke Signale in einem einzelnen Bereich aufweisen. Die starken Signale der Stoffe müssen sich dabei signifikant voneinander unterscheiden. Beispielsweise kann eine Reihe von Molekülen mit unterschiedlich substituierten Doppelbindungen und/oder unterschiedlicher Anzahl an Doppelbindungen erstellt werden. Die spektrale Auflösung im gewählten Bereich wird dann durch Verzicht auf weiter entfernt liegende restliche Spektralbereiche erhöht. Durch den Einsatz eines stärker dispergierenden Gitters kann unter Inkaufnahme eines eingeschränkteren Spektralbereichs eine höhere spektrale Auflösung im besonders gut zur sicheren Identifikation der gewählten Merkmalsstoffe Bereich erzielt werden. Hierdurch wird eine sichere Identifizierung der einzelnen für die Kodierung verwendeten Merkmalsstoffe mit Hilfe einer Ramanmessung bei hoher Geschwindigkeit möglich.

In einer weiteren bevorzugten Ausführungsform werden mehrere Bereiche vermessen. Dazu kann der Ramansensor mit mehreren Gittern ausgerüstet werden, die eine Abtastung unterschiedlicher Spektralbereiche mit hoher Auflösung (bei limitierter Anzahl der gesamten Kanalanzahl) erlauben. Analog kann ein Gitter mit entsprechendem Detektor für die Überwachung eines breiten Spektralbereiches mit geringer spektraler Auflösung z.B. auf das Fehlen entsprechender Ramansignale eingesetzt werden, während ein zweites Gitter den für den verwendeten Merkmalstoff charakteristischen Spektralbereich mit hoher Auflösung dispergiert, um hier eine sichere Zuordnung bzw. Identifikation des Markermoleküls zu erlauben.

Zur Erstellung eines Kodiersystems werden Merkmalsstoffe oder Mischungen von Merkmalsstoffen ausgewählt, welche in mehreren Bereichen starke Signale aufweisen. Zur Unterscheidung der einzelnen Merkmalsstoffe wird dann die Stärke bzw. das Vorhandensein/Nichtvorhandensein von Signalen der einzelnen Bereiche herangezogen. Beispielsweise könnte eine Kodierung durch Betrachtung der drei Bereiche bei 2040-2080 cm⁻¹ (C-C-Dreifachbindung), 990-1100 cm⁻¹ (unsubstituierte Phenylgruppen) sowie 2800-3000 cm⁻¹ (Alkylketten) getroffen werden. Hierbei lässt sich auch bei der verringerten spektralen Auflösung einer Hochgeschwindigkeitsmessung klar ein erster Kodierungsstoff (enthaltend eine Dreifachbindung, eine unsubstituierte Phenylgruppe, aber keine Alkylgruppen) von einem zweiten Kodierungsstoff (enthaltend eine Dreifachbindung, keine Phenylgruppen aber Alkylgruppen) und einem dritten Kodierungsstoff (enthaltend keine Dreifachbindung, eine unsubstituierte Phenylgruppe sowie Alkylgruppen) unterscheiden.

In einer weiteren bevorzugten Ausführungsform wird als Merkmalsstoff ein Markermolekül mit einer Dreifachbindung ausgewählt. Hierbei wird die spektrale Auflösung vorzugsweise so hoch gewählt dass eine C-C-Dreifachbindung (typischerweise bei 2040-2065 cm⁻¹) noch von einer C-N-Dreifachbindung (typischerweise 2080-2105 cm⁻¹) getrennt werden kann.

Bevorzugt wird eine Korrektur des Untergrunds, z.B. um Fluoreszenz-Störeffekte auszugleichen, durch Stützpunkte im Bereich 1900-2500 cm⁻¹ durchgeführt, da hier außer den gut definierten einzelnen Signalspitzen der Dreifachbindungen keine weiteren Raman-Störsignale auftreten. Vereinzelte Ausnahmen sind z.B. die Allene und Cyanate, die jedoch ebenso wie die Moleküle mit Dreifachbindungen relativ exotisch sind und daher nicht in üblicherweise in oder auf Banknoten vorhandenen Verbindungen auftreten.

In einer weiteren bevorzugten Ausführungsform werden als Merkmalsstoffe Verbindungen gewählt, welche spezifische Gruppen mit spektralen Bandenlagen aufweisen, die nicht für die typischerweise in Banknoten enthaltenen Stoffe auftreten. Dazu zählen neben den bereits erwähnten Dreifachbindungen z.B. auch konjugierte Mehrfachbindungen, Mercaptane und weitere S-H-Bindungen mit charakteristischen Signalen im Bereich von 2510-2540 cm⁻¹ sowie P-H-Bindungen (Signale im Bereich 2090-2500 cm⁻¹) oder Fluorverbindungen.

In einer bevorzugten Ausführungsform werden statt rein organischen Substanzen metallorganische Substanzen bzw. anorganische Substanzen als Merkmalsstoffe eingesetzt, beispielsweise in Form von metallorganischen Chelatkomplexen oder reinen Metallkomplexen bzw. Salzen oder Oxiden. Die Raman-Signaturen von metallorganischen Komplexen unterscheiden sich oft stark vom typischen Banknotenuntergrund, was eine störungsfreie Messung begünstigt. Auch keramische Verbindungen zeigen signifikante Ramanbanden, die eindeutige Zuordnungen erlauben und einen anorganischen Merkmalsstoff klar gegenüber Papier-Zuschlagstoffen wie Titandioxid oder Bariumsulfat unterscheiden.

Die Raman- oder SERS-Merkmalsstoffe die mit dem erfindungsgemäßen Ramansensor nachgewiesen werden können in das Volumen von einzelnen Bestandteilen der Wertdokumente eingebracht werden. Die Merkmalstoffe können bei der Papierherstellung durch Dosierung in die Pulpe in das Substratvolumen eingebracht werden oder in die Polymerzusammensetzung von Sicherheitsfäden, Transferstreifen, Melierfasern oder Planchetten eingebracht werden. Zusätzlich oder alternativ können die Merkmalstoffe in eine Druckfarbe oder Beschichtungszusammensetzung gemischt werden und mit herkömmlichen Druckverfahren auf der Oberfläche des Wertdokuments aufgebracht werden. In diesem Fall können räumliche Codierungen in Form von Strichcodes, 2D-Barcodes, Zeichen, Formen oder Symbolen erfolgen, die mit dem ortsauflösenden Sensor nachgewiesen werden können.

Es ist wünschenswert, die Raman-Spektren an möglichst vielen Positionen pro Banknote aufzunehmen. Dies erfolgt mindestens entlang einer Spur über die Banknote, anhand derer die Position von ein- oder aufgebrachten SERS- oder Raman-Merkmalsstoffen bestimmt und geprüft werden kann. Ebenso kann damit eine (1D-) Barcode Information durch die Bestimmung der Variation der Signalintensität abhängig von der Position auf der Banknote ausgelesen werden.

In einer Ausführungsform werden mehrere parallele Spuren, z.B. 2 Spuren, 3 Spuren, 4 Spuren oder mehr über die Banknote aufgenommen.

In der einfachsten Variante werden dazu sämtliche optischen Komponenten des Ramansensors 12 entsprechend der Anzahl der Spuren mehrfach ausgeführt und entsprechend der Spurlage positioniert. Dies bietet den Vorteil, dass die optische Strahlführung jeder Spur vollständig von den anderen Spuren getrennt ist und keinerlei Wechselwirkungen wie z.B. Übersprechen oder Streulichteinfall zu befürchten ist.

In einer kostengünstigeren Ausführungsform werden einzelne Komponenten von den verschiedenen Spuren gemeinsam genutzt. Dies bietet sich z.B. für das Beugungsgitter 113 oder die Strahlteiler 104, 107 an. Dabei kann auch eine einheitliche Beleuchtung für sämtliche Spuren verwendet werden, die dann entweder in Form einer einzigen homogenen Linie senkrecht zur Transportrichtung der Banknote fokussiert ist oder alternativ durch für jede Spur einzelne Fokuslinsen in mehrere kreis- oder ellipsenförmige Fokuspunkte fokussiert wird. In beiden Fällen wird nur ein - ggf. leistungsstärkerer - Anregungslaser 101 benötigt, der die Anregung für mehrere Kanäle übernimmt. Die Spurtrennung erfolgt in dieser Ausführungsform erst auf der Detektionsseite, wobei jede Spur ihr eigenes Detektorsystem besitzt und die Spektren jeder Spur separat aufgenommen werden.

In einer bevorzugten Ausführungsform wird das vom Wertdokument ausgehende Ramanlicht entlang mehrerer Spuren abgetastet, indem es auf Höhe jeder Spurposition von einem Linsensystem 103 bzw. 106 in jeweils einen Lichtleiter in Form einer flexiblen Glasfaser oder eines starren Lichtleiters eingekoppelt wird. Die Lichtleiter führen nun das Ramanlicht der unterschiedlichen Spurpositionen zusammen auf unterschiedliche, bevorzugt benachbarte Höhenpositionen des Eintrittsspalts eines gemeinsam für mehrere Spuren verwendeten Spektrometers. Damit können die Ramanspektren der unterschiedlichen Spurpositionen entweder mit an unterschiedlichen Höhenpositionen angebrachten Zeilendetektoren, oder alternativ mit einem einzelnen, zweidimensional auflösenden Detektorarry erfasst werden. Dabei erfolgt die Detektion entlang der Dispersionsrichtung des Spektrometers simultan, während das Auslesen der Richtung senkrecht dazu zeitversetzt erfolgen kann. Durch diese Bauform kann das Bauvolumen des Sensors gegenüber einer Variante mit mehreren Einzelspektrometern deutlich reduziert werden.

In einer weiteren Ausführungsvariante wird die Erkennungssicherheit bei der Identifikation des Raman- bzw. SERS-Merkmals dadurch erhöht, indem das Ramanspektrum bei mehr als einer Anregungswellenlänge geprüft und nachgewiesen wird. Dadurch lassen sich Ramanpeaks sicher von z.B. Fluoreszenzpeaks trennen, die nicht spektral mit der Anregungswellenlänge verschieben. Dafür wird im Sensor eine zweite Laser-Lichtquelle vorgesehen, diese kann gemeinsam mit der ersten Laser-Lichtquelle in den Strahlengang eingekoppelt werden oder ein separates Optiksystem verwenden. Die zweite Anregungswellenlänge kann spektral relativ weit von der ersten Anregungswellenlänge entfernt sein, z.B. 532nm und 785nm, oder alternativ spektral relativ dicht bei der ersten Anregungswellenlänge im Abstand von einigen nm, bevorzugt von 1nm bis 50nm, insbesondere 2-20nm liegen. Die Detektion der Ramanantworten bei beiden Anregungswellenlängen ist entweder sequentiell oder simultan möglich. Insbesondere bei simultaner Detektion werden die Ramanspektren verkompliziert, da dann alle Peaks doppelt bzw. verschoben auftauchen, was die Analyse für einen Fälschungsangriff erschweren kann.

Zusätzlich entsteht u.U. eine Überlagerung von Stokes- und Anti-Stokes-verschobenen Ramanlinien im gemessenen Spektralbereich, die sich an den durch die gewählten Anregungswellenlängen vorgegebenen Spektralpositionen überlagern bzw. ergänzen und so einen von den gewählten Anregungswellenlängen abhängigen einzigartigen "Fingerabdruck" erzeugen.

Insbesondere lässt sich durch Verwendung von 2 Anregungswellenlängen ein Kombinationsmerkmal mit Lumineszenz- und Ramansignalen auswerten und die jeweiligen Beiträge voneinander separieren, was gegenüber der Messung eines derartigen Kombinationsmerkmals mit nur einer Anregungswellenlänge eine weitere Steigerung der Fälschungskomplexität darstellt.

In einer bevorzugten Ausführungsform erfolgt eine sequentielle Beleuchtung mit Anregungslicht leicht unterschiedlicher Wellenlänge bzw. Spektralverteilung und Detektion jeweils eines Spektrums mit den Intensitätsverteilungen I₁(λ) bzw. I₂(λ). Zur Auswertung können nun die beiden erhaltenen Spektren voneinander subtrahiert und ggf. mit dem Spektralabstand Δλ der beiden Anregungswellenlängen normiert werden. In diesem Differenzspektrum ist der Untergrundbeitrag von Streulicht oder Fluoreszenzstrahlung effektiv eliminiert, so dass dieses vorteilhaft zur Echtheitsbewertung entweder direkt mit analog gebildeten Differenzspektren echter Banknoten, oder mit der Ableitung dI/dλ des bei einer Anregungswellenlänge gewonnenen Referenzspektrums echter Banknoten verglichen werden kann.

In einer besonders bevorzugten Ausführungsform erfolgt abwechselnd eine Beleuchtung mit Anregungslicht einer ersten, schmalbandigen Laserquelle bei einer ersten Wellenlänge sowie alternierend dazu mit zwei Laserlinien, die spektral dicht benachbart, bevorzugt im Abstand von 1-50nm, insbesondere 2-20nm zueinander liegen. Bevorzugt liegen die beiden Laserlinien bei der ersten Wellenlänge sowie bei einer zweiten Wellenlänge im Abstand von 1-50nm, insbesondere 2-20nm von der ersten Wellenlänge. Weiterhin bevorzugt ist der Spektralabstand der Doppellinie vorteilhaft auf ein ganzzahliges Vielfaches des Spektralabstands der Kanäle des Detektors abgestimmt. In diesem Fall treten bei Anregung mit der Doppellinie keine teilweisen Überlappungen zwischen benachbarten Spektralkanälen auf, was Artefakte vermeidet.

Eine geeignete Lichtquelle mit wahlweiser Einzel- und Doppellinienemission lässt sich beispielsweise durch eine kombinierte Einkopplung von einer ersten Laserquelle und einer zweiten Laserquelle realisieren. Beide Laserquellen sind bevorzugt monomodige Laser, z.B. DFB-Laser, so dass sich durch Ansteuerung eines Lasers bzw. beider Laser leicht das gewünschte Spektrum der Anregungsstrahlung steuern lässt. Besonders bevorzugt werden die erste und die zweite Laserquelle als Oszillatoren in einen optischen Leistungsverstärker in einer MOPA-Architektur (master oscillator power amplifier) eingekoppelt. Dies bietet den Vorzug dass eine identische Einkopplung der Anregungsstrahlung auf die zu prüfende Banknote sichergestellt ist, da der Ausgangsort bzw. das Strahlprofil der Anregungsstrahlung trotz unterschiedlicher Spektralverteilung stets durch das gleiche Bauelement, nämlich dem Leistungsverstärker bestimmt wird.

Bei diesem Beleuchtungsschema der Anregungsstrahlung wird mit dem Sensor bei der Beleuchtung mit der Doppellinie ein Ramanspektrum mit doppelt auftretenden Ramanpeaks sowie einfach auftretenden Fluoreszenzpeaks erhalten, während bei der Beleuchtung mit der monochromatischen Anregungsstrahlung jeder Raman-Peak einzeln in Überlagerung mit einem etwaigen Fluoreszenzuntergrund auftritt. Wird nun nach Normierung beider Spektren das mit monochromatischer Anregungsstrahlung erhaltene Spektrum von dem mit der Anregungsstrahlung mit der Doppellinie erhaltenen Spektrum subtrahiert, so wird nicht nur der Fluoreszenzuntergrund auch in schwierigen bzw. intensiven Fällen entfernt, sondern es werden gleichzeitig auch die Raman- Doppelpeaks wieder zu einem einfachen Ramanspektrum mit nur einzeln auftretenden Peaks reduziert. Dieses Ramanspektrum kann nun zur Echtheitsbewertung besonders einfach mit Referenzspektren echter Banknoten verglichen werden, ohne dass weitere Entfaltungen nötig sind.

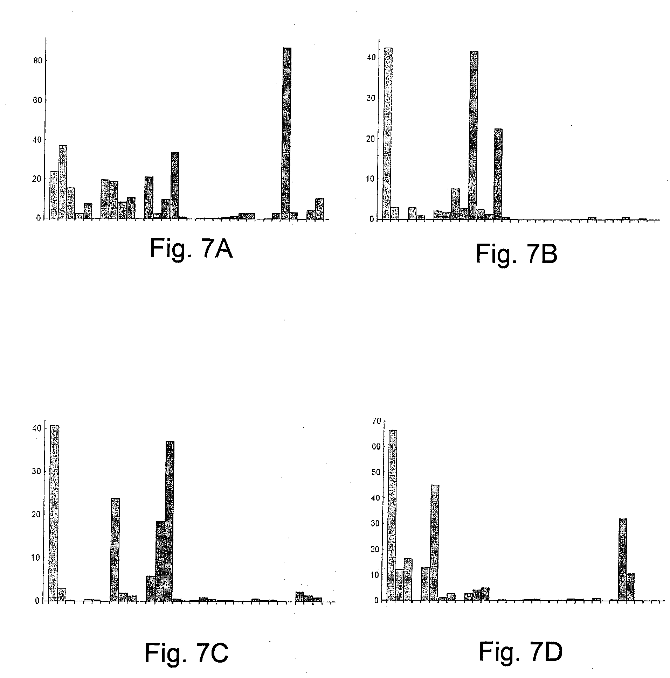

Die Figuren 7A bis 7D stellen untergrundkorrigierte Messdaten des Ramansensors 12 von vier unterschiedlichen Merkmalsstoffen in einer linear in der Wellenlänge skalierten Einteilung der Spektralkanäle dar. Die Anregungswellenlänge betrug 488 nm. Der Untergrundanteil der Intensitätswerte in den Spektralkanälen wurde durch das gleitende Minimum aus jeweils fünf Spektralkanälen bestimmt und von den Intensitätswerten abgezogen.

Die vier verschiedenen Merkmalstoffe basieren auf den vier verschiedenen Markermolekülen Zitronensäure (Figur 7A), Nitrobiphenyl (Figur 7B), Diphenyloxadiazol (Figur 7C), bzw. Tetrachlorbutan (Figur 7D). Man erkennt, dass sich die vier verschiedenen Merkmalsstoffe trotz der im Vergleich zu einem Laborspektrometer reduzierten Spektralauflösung sehr gut anhand ihres jeweiligen spektralen Fingerabdrucks mit Signalbeiträgen in recht weit beabstandeten Spektralbereichen voneinander unterscheiden bzw. identifizieren lassen.

## Patentansprüche

1. Ein Sensor (12) zur maschinellen Prüfung von bewegten Wertdokumenten (150) mit mindestens einem Raman oder SERS oder SERRS-Sicherheitsmerkmal, wobei der Sensor (12) dazu ausgebildet ist das Wertdokument (150) zur Prüfung mit Anregungslicht aus einer Laserquelle (101) zu beleuchten und das resultierende Ramanlicht der Sicherheitsmerkmale in einem Spektrometer (110) zu dispergieren und mit einem Detektor (115) mit mehreren Spektralkanälen spektral aufgelöst zu erfassen, wobei das in den Spektralkanälen gesammelte Licht vom gleichen Flächenbereich des Wertdokuments (150) synchron vom Detektor (115) erfasst wird **dadurch gekennzeichnet, dass** Spektralkanäle gleichzeitig parallel ausgelesen werden
und durch wiederholte Messung den Spektralkanälen entsprechende ortsaufgelöste Messsignale gebildet werden.

2. Sensor nach Anspruch 1 **dadurch gekennzeichnet, dass** die synchrone Erfassung der Spektralkanäle innerhalb von weniger als 500µs, insbesondere weniger als 100µs erfolgt.

3. Sensor nach Anspruch 1 oder 2 **dadurch gekennzeichnet, dass** der Sensor (12) eine Ortsauflösung in Bewegungsrichtung (T) von weniger als 12 mm, bevorzugt weniger als 4 mm, weiter bevorzugt weniger als 2 mm bei einer Geschwindigkeit des Wertdokuments (150) von mehr als 10m/s aufweist, wofür die Anzahl der Spektralkanäle des Sensors (12) auf unter 4000 Kanäle reduziert ist.

4. Sensor nach einem der vorherigen Ansprüche, **dadurch gekennzeichnet, dass** der Sensor (12) weniger als 100 Spektralkanäle aufweist.

5. Sensor nach einem der vorherigen Ansprüche, **dadurch gekennzeichnet, dass** das Anregungslicht eines Anregungslasers (101) über einen zu einem Hauptstrahlengang (120) geneigten Strahlteiler (104) in Richtung des zu prüfenden Wertdokuments (150) lenkt, wobei der Strahlteiler (104) als Kantenfilter zur selektiven Reflexion des Anregungslichts ausgebildet ist.

6. Sensor nach einem der vorherigen Ansprüche, **dadurch gekennzeichnet, dass** das Spektrometer (110) einen Eintrittsspalt aufweist und derart ausgelegt ist, dass das Rayleigh-gestreute Anregungslicht wieder auf den Eintrittsspalt abgebildet wird.

7. Sensor nach einem der vorherigen Ansprüche, **dadurch gekennzeichnet, dass** das vom Wertdokument (150) ausgehende gestreute Anregungslicht über ein Spaltmodul (111) in das Spektrometer (110) eingekoppelt wird wobei das Spaltmodul (111) ein Absorptionselement (203) aufweist, das das Rayleigh-gestreute Anregungslicht zumindest teilweise absorbiert.

8. Sensor nach einem der vorherigen Ansprüche, **dadurch gekennzeichnet, dass** das vom Wertdokument (150) ausgehende gestreute Anregungslicht über ein Spaltmodul (111) in das Spektrometer (110) eingekoppelt wird wobei das Spaltmodul (11) ein Detektorelement zur Leistungs- und/oder Wellenlängenüberwachung des Rayleigh-gestreuten Anregungslichts aufweist.

9. Sensor nach einem der vorherigen Ansprüche, **dadurch gekennzeichnet, dass** die Leistung des Anregungslichtes in Abhängigkeit von dem gemessenen Remissionssignal gewählt wird.

10. Sensor nach einem der vorherigen Ansprüche, **dadurch gekennzeichnet, dass** die Leistung des Anregungslichtes reduziert wird wenn die gemessene Remission kleiner als ein Schwellwert ist oder sich die gemessene Remission über mehrere Messtakte hinweg nicht ändert.

11. Sensor nach einem der vorherigen Ansprüche, wobei der Sensor (12) weiterhin eine Auswerteeinheit (130) aufweist, die aus den Spektralkanälen entsprechenden Messsignalen einen Untergrundanteil bestimmt und diesen von den Messsignalen subtrahiert um untergrundkorrigierte Messsignale zu erzeugen, **dadurch gekennzeichnet, dass** der Untergrundanteil anhand einer gleitenden Perzentile aus den Intensitätswerten oder anhand der Intensitätswerte in vorbestimmten Spektralkanälen bestimmt wird.

12. Sensor nach einem der vorherigen Ansprüche, **dadurch gekennzeichnet, dass** der Sensor (12) dazu ausgebildet ist das Wertdokument (150) zur Prüfung weiterhin mit Anregungslicht aus einer zweiten Laserquelle zu beleuchten und das resultierende Ramanlicht der Sicherheitsmerkmale in einem Spektrometer (110) zu dispergieren und mit einem Detektor (115) mit mehreren Spektralkanälen spektral aufgelöst zu erfassen.

13. Sensor nach einem der vorherigen Ansprüche, **dadurch gekennzeichnet, dass** der Sensor (12) dazu ausgebildet ist das Wertdokument (150) mit einer Laserlinie (101) bei einer ersten Wellenlänge und alternierend dazu mit zwei Laserlinien mit einem spektralen Abstand von 1 - 50nm, bevorzugt von 2-20nm zu beleuchten.

14. Sensor nach einem der vorherigen Ansprüche, **dadurch gekennzeichnet, dass** der Sensor (12) geeignet ist, eine Kodierung mit Merkmalstoffen zu unterscheiden und zu identifizieren, wobei die Merkmalstoffe Markermoleküle umfassen, wobei die Markermoleküle starke Ramansignale in einem oder mehreren Spektralbereichen mit einem jeweiligen spektralen Abstand von mehr als 50 cm⁻¹, bevorzugt mehr als 100 cm⁻¹, insbesondere mehr als 200 cm⁻¹, aufweisen.

15. Verfahren zur maschinellen Prüfung von Wertdokumenten mit mindestens einem Raman oder SERS oder SERRS-Sicherheitsmerkmal mittels eines Sensors, wobei
- das Wertdokument während der Prüfung mit hoher Geschwindigkeit relativ zum Sensor bewegt wird,
- das Wertdokument zur Prüfung mit Anregungslicht aus einer Laserquelle beleuchtet wird,
- das resultierende Ramanlicht der Sicherheitsmerkmale in einem Spektrometer dispergiert wird,
- mit einem Detektor mit mehreren Spektralkanälen spektral aufgelöst erfasst wird,
- den Spektralkanälen entsprechende Messsignale gebildet werden,
wobei das in den Spektralkanälen gesammelte Licht vom gleichen Flächenbereich des Wertdokuments synchron vom Detektor erfasst wird, **dadurch gekennzeichnet, dass**
durch wiederholte Messung ortsaufgelöste Messsignale gebildet werden, wobei die Spektralkanäle gleichzeitig parallel ausgelesen werden.

16. Verfahren nach Anspruch 15, **dadurch gekennzeichnet, dass** in den den Spektralkanälen entsprechenden Messsignalen ein Untergrundanteil anhand einer gleitenden Perzentile aus den Intensitätswerten bestimmt wird oder anhand der Intensitätswerte in vorbestimmten Spektralkanälen bestimmt und optional durch ein Polynom interpoliert wird und von den Intensitätswerten abgezogen wird und damit untergrundkorrigierte Messwerte berechnet werden.

17. Verfahren nach Anspruch 16, **dadurch gekennzeichnet, dass** eine numerische Klassifikation der untergrundkorrigierten Messwerte durchgeführt wird.

18. Verfahren nach einem der Ansprüche 15 bis 17, **dadurch gekennzeichnet, dass** eine Echtheitserkennung des Wertdokuments durch einen Verifikationsalgorithmus durchgeführt wird, der auf der Berechnung eines Ähnlichkeitsmaßes zwischen dem gemessenen Spektrum und dem Referenzspektrum beruht.

19. Verfahren nach einem der Ansprüche 15 bis 18, **dadurch gekennzeichnet, dass** eine spektrale Verschiebung der Intensitätswerte innerhalb eines vorbestimmten Bereichs korrigiert oder bei der Echtheitserkennung toleriert wird.

20. Kodiersystem mit dem Sensor nach einem der Ansprüche 1 bis 14, welches zur Unterscheidung von Wertdokumenten eingerichtet ist, **dadurch gekennzeichnet dass** die Wertdokumente mit Merkmalsstoffen oder Mischungen von Merkmalsstoffen markiert werden, welche Markermoleküle umfassen, die starke Ramansignale in einem oder mehreren Spektralbereichen mit jeweils einem spektralen Abstand von mehr als 50 cm⁻¹, bevorzugt mehr als 100 cm⁻¹, insbesondere mehr als 200 cm⁻¹, aufweisen, wobei zur Unterscheidung der einzelnen Merkmalsstoffe die Stärke bzw. das Vorhandensein/ Nichtvorhandensein von Signalen der einzelnen Bereiche herangezogen wird.

21. Kodiersystem nach Anspruch 20, **dadurch gekennzeichnet dass** die Markermoleküle eine oder mehrere Molekülstrukturen umfassen, die aus konjugierten Mehrfachbindungen, unterschiedlich substituierten Doppelbindungen, unterschiedlicher Anzahl an Doppelbindungen, C-C-Dreifachbindungen, unsubstituierten Phenylgruppen, Mercaptanen, S-H-Bindungen, P-H-Bindungen oder Fluorgruppen, ausgewählt sind.

22. Kodiersystem nach Anspruch 20, **dadurch gekennzeichnet dass** die Markermoleküle im Spektralbereich von 1900 cm⁻¹ bis 2500 cm⁻¹ keine signifikanten Ramansignale aufweisen.

## Claims

1. Sensor (12) for machine-based checking of moving valuable documents (150) having at least one Raman or SERS or SERRS security feature, wherein the sensor (12) is designed to illuminate the valuable document (150) with excitation light from a laser source (101) for checking purposes and disperse the resultant Raman light from the security features in a spectrometer (110) and capture said resultant Raman light in spectrally resolved fashion using a detector (115) with a plurality of spectral channels, wherein the light from the same region of the valuable document (150) collected in the spectral channels is captured synchronously by the detector (115), **characterized in that** the spectral channels are simultaneously read in parallel and spatially resolved measurement signals corresponding to the spectral channels are formed by repeated measurements.

2. Sensor according to Claim 1, **characterized in that** the synchronous capture of the spectral channels is implemented within less than 500 ps, in particular less than 100 µs.

3. Sensor according to Claim 1 or 2, **characterized in that** the sensor (12) has a spatial resolution in the movement direction (T) of better than 12 mm, preferably better than 4 mm, more preferably better than 2 mm in the case of a valuable document (150) speed of more than 10 m/s, wherefore the number of spectral channels of the sensor (12) is reduced to less than 4000 channels.

4. Sensor according to any of the preceding claims, **characterized in that** the sensor (12) has fewer than 100 spectral channels.

5. Sensor according to any of the preceding claims, **characterized in that** the excitation light from an excitation laser (101) is steered via a beam splitter (104), which is at an angle to a main beam path (120), in the direction of the valuable document (150) to be verified, wherein the beam splitter (104) is designed as an edge filter for selective reflection of the excitation light.

6. Sensor according to any of the preceding claims, **characterized in that** the spectrometer (110) comprises an entrance gap and is designed such that the Rayleigh-scattered excitation light is imaged on the entrance gap again.

7. Sensor according to any of the preceding claims, **characterized in that** the scattered excitation light emanating from the valuable document (150) is input coupled into the spectrometer (110) via a gap module (111), wherein the gap module (111) comprises an absorption element (203) which at least partially absorbs the Rayleigh-scattered excitation light.

8. Sensor according to any of the preceding claims, **characterized in that** the scattered excitation light emanating from the valuable document (150) is input coupled into the spectrometer (110) via a gap module (111), wherein the gap module (11) comprises a detector element for monitoring the power and/or wavelength of the Rayleigh-scattered excitation light.

9. Sensor according to any of the preceding claims, **characterized in that** the power of the excitation light is chosen on the basis of the measured diffusely reflected signal.

10. Sensor according to any of the preceding claims, **characterized in that** the power of the excitation light is reduced if the measured diffuse reflection is less than a threshold value or the measured diffuse reflection does not change over a plurality of measurement cycles.

11. Sensor according to any of the preceding claims, wherein the sensor (12) also comprises an evaluation unit (130) which determines a background proportion from the measurement signals corresponding to the spectral channels and subtracts said background proportion from the measurement signals in order to create background-corrected measurement signals, **characterized in that** the background proportion is determined on the basis of a sliding percentile from the intensity values or on the basis of the intensity values in predetermined spectral channels.

12. Sensor according to any of the preceding claims, **characterized in that** the sensor (12) is designed to also illuminate the valuable document (150) with excitation light from a second laser source for checking purposes and disperse the resultant Raman light from the security features in a spectrometer (110) and capture said resultant Raman light in spectrally resolved fashion using a detector (115) with a plurality of spectral channels.

13. Sensor according to any of the preceding claims, **characterized in that** the sensor (12) is designed to illuminate the valuable document (150) with a laser line (101) at a first wavelength and, in alternation therewith, with two laser lines with a spectral spacing of 1-50 nm, preferably 2-20 nm.

14. Sensor according to any of the preceding claims, **characterized in that** the sensor (12) is suitable for distinguishing and identifying a coding with feature substances, wherein the feature substances comprise marker molecules, wherein the marker molecules have strong Raman signals in one or more spectral ranges with a respective spectral spacing of more than 50 cm⁻¹, preferably more than 100 cm⁻¹, in particular more than 200 cm⁻¹.

15. Method for machine-based checking of valuable documents having at least one Raman or SERS or SERRS security feature by means of a sensor, wherein
- the valuable document is moved at high speed relative to the sensor during the check,
- the valuable document is illuminated with excitation light from a laser source for checking purposes,
- the resultant Raman light from the security features is dispersed in a spectrometer,
- spectrally resolved capture is implemented using a detector with a plurality of spectral channels,
- measurement signals corresponding to the spectral channels are formed,
wherein the light from the same region of the valuable document collected in the spectral channels is captured synchronously by the detector, **characterized in that** spatially resolved measurement signals are formed by repeated measurements, wherein the spectral channels are simultaneously read in parallel.

16. Method according to Claim 15, **characterized in that** a background proportion in the measurement signals corresponding to the spectral channels is determined on the basis of a sliding percentile from the intensity values or determined on the basis of the intensity values in predetermined spectral channels and optionally interpolated by way of a polynomial and subtracted from the intensity values, and hence background-corrected measurement values are calculated.

17. Method according to Claim 16, **characterized in that** a numerical classification of the background-corrected measurement values is performed.

18. Method according to any of Claims 15 to 17, **characterized in that** an authenticity of the valuable document is recognized by performing a verification algorithm which is based on the calculation of a similarity measure between the measured spectrum and the reference spectrum.

19. Method according to any of Claims 15 to 18, **characterized in that** a spectral shift of the intensity values within a predetermined range is corrected or tolerated when recognizing authenticity.

20. Coding system having the sensor according to any of Claims 1 to 14, configured to distinguish valuable documents, **characterized in that** the valuable documents are marked with feature substances or mixtures of feature substances which comprise marker molecules which have strong Raman signals in one or more spectral ranges with a respective spectral spacing of more than 50 cm⁻¹, preferably more than 100 cm⁻¹, in particular more than 200 cm⁻¹, wherein the strength or presence/lack of signals from the individual regions is used to distinguish between the individual feature substances.

21. Coding system according to Claim 20, **characterized in that** the marker molecules comprise one or more molecule structures selected from conjugated multiple bonds, differently substituted double bonds, a different number of double bonds, C-C triple bonds, unsubstituted phenyl groups, mercaptans, S-H bonds, P-H bonds or fluorine groups.

22. Coding system according to Claim 20, **characterized in that** the marker molecules do not have significant Raman signals in the spectral range from 1900 cm⁻¹ to 2500 cm⁻¹.

## Revendications

1. Capteur (12) destiné à la vérification mécanique de documents de valeur en mouvement (150) comprenant au moins un attribut de sécurité Raman ou SERS ou SERRS, le capteur (12) étant conçu pour éclairer le document de valeur (150) à vérifier avec une lumière d'excitation provenant d'une source laser (101) et pour disperser la lumière Raman résultante des attributs de sécurité dans un spectromètre (110) et pour effectuer une détection à résolution spectrale à l'aide d'un détecteur (115) pourvu de plusieurs canaux spectraux, la lumière collectée dans les canaux spectraux et provenant de la même zone de surface du document de valeur (150) étant détectée de manière synchrone par le détecteur (115), **caractérisé en ce que** les canaux spectraux sont lus simultanément en parallèle et des signaux de mesure à résolution locale, qui correspondent aux canaux spectraux, sont formés par des mesures répétées.

2. Capteur selon la revendication 1, **caractérisé en ce que** la détection synchrone des canaux spectraux est effectuée en moins de 500 ps, notamment en moins de 100 ps.

3. Capteur selon la revendication 1 ou 2, **caractérisé en ce que** le capteur (12) présente dans la direction de déplacement (T) une résolution locale inférieure à 12 mm, de préférence inférieure à 4 mm, plus préférablement inférieure à 2 mm, pour une vitesse du document de valeur (150) supérieure à 10 m/s, pour laquelle le nombre de canaux spectraux du capteur (12) est réduit à moins de 4000 canaux.

4. Capteur selon l'une des revendications précédentes, **caractérisé en ce que** le capteur (12) comporte moins de 100 canaux spectraux.

5. Capteur selon l'une des revendications précédentes, **caractérisé en ce que** la lumière d'excitation d'un laser d'excitation (101) est guidée en direction du document de valeur (150) à vérifier par le biais d'un séparateur de faisceau (104) incliné par rapport à un trajet de faisceau principal (120), le séparateur de faisceau (104) étant conçu comme un filtre de bord destiné à une réflexion sélective de la lumière d'excitation.

6. Capteur selon l'une des revendications précédentes, **caractérisé en ce que** le spectromètre (110) comporte une fente d'entrée et est conçu de manière que la lumière d'excitation diffusée par Rayleigh soit à nouveau reproduite sur la fente d'entrée.

7. Capteur selon l'une des revendications précédentes, **caractérisé en ce que** la lumière d'excitation diffusée provenant du document de valeur (150) est injectée par couplage dans le spectromètre (110) par le biais d'un module à fente (111), le module à fente (111) comportant un élément d'absorption (203) qui absorbe au moins partiellement la lumière d'excitation diffusée par Rayleigh.

8. Capteur selon l'une des revendications précédentes, **caractérisé en ce que** la lumière d'excitation diffusée provenant du document de valeur (150) est injectée par couplage dans le spectromètre (110) par le biais d'un module à fente (111), le module à fente (11) comportant un élément de détection destiné à surveiller la puissance et/ou la longueur d'onde de la lumière d'excitation diffusée par Rayleigh.

9. Capteur selon l'une des revendications précédentes, **caractérisé en ce que** la puissance de la lumière d'excitation est choisie en fonction du signal de réflectance mesuré.

10. Capteur selon l'une des revendications précédentes, **caractérisé en ce que** la puissance de la lumière d'excitation est réduite si la réflectance mesurée est inférieure à une valeur seuil ou si la réflectance mesurée ne varie pas sur plusieurs cycles de mesure.

11. Capteur selon l'une des revendications précédentes, le capteur (12) comportant en outre une unité d'évaluation (130) qui détermine une composante de fond à partir des signaux de mesure correspondant aux canaux spectraux et soustrait celle-ci des signaux de mesure pour générer des signaux de mesure corrigés en termes de fond, **caractérisé en ce que** la composante de fond est déterminée sur la base d'un percentile glissant à partir des valeurs d'intensité ou sur la base des valeurs d'intensité dans des canaux spectraux prédéterminés.

12. Capteur selon l'une des revendications précédentes, **caractérisé en ce que** le capteur (12) est conçu pour éclairer le document de valeur (150) à vérifier en plus avec la lumière d'excitation provenant d'une deuxième source laser et pour disperser la lumière Raman résultante des attributs de sécurité dans un spectromètre (110) et pour effectuer une détection à résolution spectrale à l'aide d'un détecteur (115) pourvu de plusieurs canaux spectraux.

13. Capteur selon l'une des revendications précédentes, **caractérisé en ce que** le capteur (12) est conçu pour éclairer le document de valeur (150) avec une ligne laser (101) à une première longueur d'onde et alternativement avec deux lignes laser présentant une distance spectrale de 1 à 50 nm, de préférence de 2 à 20 nm.

14. Capteur selon l'une des revendications précédentes, **caractérisé en ce que** le capteur (12) est adapté pour distinguer et identifier un codage avec des substances d'attribut, les substances d'attribut comprenant des molécules de marquage, les molécules de marquage comportant des signaux Raman puissants dans un ou plusieurs domaines spectraux avec une distance spectrale respective supérieure à 50 cm⁻¹, de préférence supérieure à 100 cm⁻¹, en particulier supérieure à 200 cm⁻¹.

15. Procédé de vérification mécanique de documents de valeur comprenant au moins un attribut de sécurité Raman ou SERS ou SERRS à l'aide d'un capteur,
- le document de valeur étant déplacé à grande vitesse par rapport au capteur pendant la vérification,
- le document de valeur à vérifier étant éclairé avec une lumière d'excitation provenant d'une source laser,
- la lumière Raman résultante des attributs de sécurité étant dispersée dans un spectromètre,
- une détection à résolution spectrale étant effectuée à l'aide d'un détecteur pourvu de plusieurs canaux spectraux,
- des signaux de mesure étant formés qui correspondent aux canaux spectraux,
la lumière collectée dans les canaux spectraux et provenant de la même zone de surface du document de valeur étant détectée de manière synchrone par le détecteur, **caractérisé en ce que**
des signaux de mesure à résolution locale sont formés par des mesures répétées, les canaux spectraux étant lus simultanément en parallèle.

16. Procédé selon la revendication 15, **caractérisé en ce que**, dans les signaux de mesure qui correspondent aux canaux spectraux, une composante de fond est déterminée sur la base d'un percentile glissant à partir des valeurs d'intensité ou est déterminée sur la base des valeurs d'intensité dans des canaux spectraux et est éventuellement interpolée par un polynôme et soustraite des valeurs d'intensité et des valeurs de mesure corrigées en termes de fond sont ainsi calculées.

17. Procédé selon la revendication 16, **caractérisé en ce qu'**une classification numérique des valeurs de mesure corrigées en termes de fond est effectuée.

18. Procédé selon l'une des revendications 15 à 17, **caractérisé en ce que** l'authentification du document de valeur est effectuée par un algorithme de vérification qui repose sur le calcul d'une mesure de similarité entre le spectre mesuré et le spectre de référence.

19. Procédé selon l'une des revendications 15 à 18, **caractérisé en ce qu'**un décalage spectral des valeurs d'intensité est corrigé dans un domaine prédéterminé ou toléré lors de l'authentification.

20. Système de codage comprenant le capteur selon l'une des revendications 1 à 14, lequel système de codage est conçu pour distinguer des documents de valeur,
**caractérisé en ce que** les documents de valeur sont marqués avec des substances d'attribut ou des mélanges de substances d'attribut qui comprennent des molécules de marquage qui présentent chacune des signaux Raman puissants dans un ou plusieurs domaines spectraux, présentant chacun une distance spectrale supérieure à 50 cm⁻¹, de préférence supérieure à 100 cm⁻¹, notamment supérieure à 200 cm⁻¹, l'intensité ou la présence/l'absence de signaux dans les domaines individuels étant utilisée pour distinguer les différentes substances d'attribut.

21. Système de codage selon la revendication 20, **caractérisé en ce que** les molécules de marquage comprennent une ou plusieurs structures moléculaires qui sont choisies parmi les liaisons multiples conjuguées, les doubles liaisons différemment substituées, un nombre différent de doubles liaisons, de triples liaisons C-C, de groupes phényles non substitués, de mercaptans, de liaisons S-H, de liaisons P-H ou des groupes fluor.

22. Système de codage selon la revendication 20, **caractérisé en ce que** les molécules de marquage ne présentent pas de signaux Raman significatifs dans le domaine spectral allant de 1900 cm⁻¹ à 2500 cm⁻¹.
